(19) Europäisches Patentamt
European Patent Office
Office européen des brevets

(11) **EP 4 507 384 A1**

(12) **EUROPEAN PATENT APPLICATION**
published in accordance with Art. 153(4) EPC

(43) Date of publication:
**12.02.2025 Bulletin 2025/07**

(21) Application number: **23777743.8**

(22) Date of filing: **02.03.2023**

(51) International Patent Classification (IPC):
***H04W 36/06*** (2009.01)

(52) Cooperative Patent Classification (CPC):
**H04W 36/06**

(86) International application number:
**PCT/CN2023/079263**

(87) International publication number:
**WO 2023/185365 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.04.2022 CN 202210348961**

(71) Applicant: **Datang Mobile Communications
Equipment Co., Ltd.
Beijing 100085 (CN)**

(72) Inventor: **WANG, Junwei
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **CARRIER SWITCHING METHOD AND APPARATUS, TERMINAL, AND NETWORK SIDE DEVICE**

(57) The present disclosure provides a carrier switching method and apparatus, a terminal, and a network side device. The method includes: from a first carrier set for transmitting data before switching and a second carrier set for transmitting data after switching, determining a carrier involved in switching, wherein the first carrier set and the second carrier set each include at least one carrier, and there is at least one different carrier between a carrier included in the first carrier set and a carrier included in the second carrier set; and within a carrier switching time duration period, the terminal not transmitting data on the carrier involved in switching.

determining a carrier, involved in switching, in a first carrier set for transmitting data before the switching and a second carrier set for transmitting data after the switching, wherein each of the first carrier set and the second carrier set comprises at least one carrier, and at least one carrier of carriers contained in the first carrier set is different from carriers contained in the second carrier set — 401

during carrier switching, a terminal does not transmitting data on the carrier involved in the switching — 402

**FIG. 4**

EP 4 507 384 A1

**Description**

**CROSS-REFERENCE TO RELATED APPLICATION**

This application claims a priority to Chinese Patent Application No. 202210348961.6 filed on April 1, 2022, the disclosures of which are incorporated in their entirety by reference herein.

**TECHNICAL FIELD**

The present disclosure relates to the field of communications technologies, and in particular, to a carrier switching method and apparatus, a terminal, and a network side device.

**BACKGROUND**

In the related art, uplink switching between two different carriers is supported; during carrier transmission, the terminal needs to terminate transmitting during carrier switching, that is, the switching time duration is needed, the value of the switching time duration depends on the implementation structure of the terminal, and the more devices shared among different carriers, the longer the switching time duration is, and vice versa.

The related technical solution only supports switching between two carriers of a terminal in two bands, and when the number of switched bands/carriers is increased to 3 or 4 or more, some new scenarios that cannot be covered by related art appear, because a carrier switching method in the related art cannot be completely applicable to a switching scenario of three or more carriers.

**SUMMARY**

An objective of the present disclosure is to provide a carrier switching method and a carrier switching device, a terminal, and a network side device, to resolve a problem that a carrier switching method in the related art is not applicable to a switching scenario of three or more carriers.

A carrier switching method applied to a terminal is provided in the embodiments of the present disclosure. The method includes: determining a carrier, involved in switching, in a first carrier set for transmitting data before the switching and a second carrier set for transmitting data after the switching, wherein each of the first carrier set and the second carrier set includes at least one carrier, and at least one carrier of carriers contained in the first carrier set is different from carriers contained in the second carrier set; wherein during carrier switching, a terminal does not transmit data on the carrier involved in the switching.

Optionally, a quantity of carriers contained in the first carrier set and the second carrier set and different between the first carrier set and the second carrier set is greater than or equal to 3.

Optionally, the number of antenna ports configured for the carriers included in the first carrier set is the same as the number of antenna ports configured for the carriers included in the second carrier set.

Optionally, a value of the number is 1.

Optionally, determining the carrier, involved in the switching, in the first carrier set for transmitting data before the switching and the second carrier set for transmitting data after the switching includes: when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching; using the determined switched-from carrier and the determined switched-to carrier as carriers involved in the switching.

Optionally, determining the carrier, involved in the switching, in the first carrier set for transmitting data before the switching and the second carrier set for transmitting data after the switching includes: when the second carrier set includes a first carrier of a first band, the first carrier set includes a second carrier of a second band and a third carrier of a third band, and when each of the first carrier, the second carrier and the third carrier is configured for one-port transmission, determining the carrier involved in the switching includes: using the second carrier as the switched-from carrier, and using the first carrier as the switched-to carrier; or, using the third carrier as the switched-from carrier, and using the first carrier as the switched-to carrier.

Optionally, determining the carrier, involved in the switching, in the first carrier set for transmitting data before the switching and the second carrier set for transmitting data after the switching includes: when the second carrier set includes a second carrier of a second band and a third carrier of a third band and the first carrier set includes a first carrier of a first band and when each of the second carrier, the third carrier and the first carrier is configured for one-port transmission, determining the carrier involved in the switching includes: using the first carrier as the switched-from carrier, and using the second carrier as the switched-to carrier; or, using the first carrier as the switched-from carrier, and using the third carrier as the switched-to carrier.

Optionally, determining the carrier, involved in the switching, in the first carrier set for transmitting data before the switching and the second carrier set for transmitting data after the switching includes: when the second carrier set includes a first carrier of a first band and a second carrier of a second band and the first carrier set includes a first carrier of a first band and a third carrier of a third band and when each of the first carrier, the second carrier and the third carrier is configured for one-port transmission, determining the carrier involved in the switching includes: using the third carrier as the switched-from carrier, and using the second carrier as the switched-to carrier; or using the first carrier in the first carrier set as a first switched-from carrier, and using the second carrier as a first switched-to carrier, and using the third carrier as a second switched-from carrier and using the first carrier in the second carrier set as the second switched-to carrier.

Optionally, determining the carrier, involved in the switching, in the first carrier set for transmitting data before the switching and the second carrier set for transmitting data after the switching includes: when the second carrier set includes a first carrier of a first band and a second carrier of a second band and the first carrier set includes a third carrier of a third band and a fourth carrier of a fourth band; and when each of the first carrier, the second carrier, the third carrier and the fourth carrier is configured for one-port transmission, determining the carrier involved in the switching includes: using the third carrier as a first switched-from carrier, using the first carrier as a first switched-to carrier, using the fourth carrier as a second switched-from carrier, and using the second carrier as a second switched-to carrier; or using the third carrier as a first switched-from carrier, using the second carrier as a first switched-to carrier, using the fourth carrier as a second switched-from carrier, and using the first carrier as a second switched-to carrier.

Optionally, determining the carrier involved in the switching includes: determining carrier switching relationship between carriers in the first carrier set and carriers in the second carrier set; determining the carrier involved in the switching according to the carrier switching relationship.

Optionally, the carrier switching relationship includes at least one of the following information: correspondence between transmission channels used by different carriers to transmit data; a determined carrier switching pair including two carriers for performing the switching; a switching order among different carrier switching pairs.

Optionally, the carrier switching relationship is determined by at least one of the following methods: determination based on preset carrier switching pair information; determination based on a rule of minimum signal loss; determination according to a scheduling signaling of downlink control information (DCI).

Optionally, the carrier switching pair information includes: carrier information before the switching; carrier information after the switching; carrier switching information involved in the switching.

Optionally, determination based on the rule of minimum signal loss includes: determining a carrier switching group according to at least one carrier for transmitting data before the switching and at least one carrier for transmitting data after the switching, wherein the carrier switching group includes a carrier before the switching and a carrier after the switching; determining a signal interruption duration when performing carrier switching of each carrier switching group; according to a rule that the signal interruption duration is shortest, determining the carrier switching group for involved in the switching.

Optionally, the scheduling signaling of the DCI carries a switching indicator, wherein the switching indicator includes: a switched-to carrier involved in the switching, and a switched-from carrier used before the switching, wherein a transmission channel corresponding to the switched-from carrier is converted into a transmission channel corresponding to the switched-to carrier after the switching; or a switched-from carrier used before the switching, wherein the transmission channel corresponding to the switched-from carrier is converted into the transmission channel corresponding to the switched-to carrier after the switching.

A carrier switching method applied to a network side device is provided. The method includes: determining by a network-side device a carrier, involved in switching, in a scheduled first carrier set for transmitting data before switching and a scheduled second carrier set for transmitting data after the switching, wherein each of the first carrier set and the second carrier set includes at least one carrier, and at least one carrier of carriers contained in the first carrier set is different from carriers contained in the second carrier set; wherein during carrier switching, the network-side device does not receive data on the carrier involved in the switching.

Optionally, when a quantity of carriers contained in the first carrier set and the second carrier set and different between the first carrier set and the second carrier set is greater than or equal to 3.

Optionally, determining the carrier, involved in the switching, in the scheduled first carrier set for transmitting data before the switching and the scheduled second carrier set for transmitting data after the switching includes: in a case that the second carrier set includes a first carrier of a first band, the first carrier set includes a second carrier of a second band and a third carrier of a third band, and each of the first carrier, the second carrier, and the third carrier is configured for one-port transmission, determining that the carriers involved in switching include: the second carrier used as a switched-from carrier, and the first carrier used as the switched-to carrier; or, the third carrier used as a switched-from carrier, and the first carrier used as a switched-to carrier.

Optionally, determining the carrier, involved in the switching, in the scheduled first carrier set for transmitting data before the switching and the scheduled second carrier set for transmitting data after the switching includes: in a case that the second carrier set includes a second carrier of a second band and a third carrier of a third band and the first carrier set includes a first carrier of a first band, and each of the second carrier, the third carrier, and the first carrier is configured for one-port transmission, determining that the carriers involved in switching include: the first carrier used as a switched-from carrier and the second carrier used as the switched-to carrier; or, the first carrier used as a switched-from carrier, and the third carrier used as a switched-to carrier.

Optionally, determining the carrier, involved in the switching, in the scheduled first carrier set for transmitting data before the switching and the scheduled second carrier set for transmitting data after the switching includes: in a case that the second carrier set includes a first carrier of a first band and a second carrier of a second band, the first carrier set includes a first carrier of a first band and a third carrier of a third band, and each of the first carrier, the second carrier, and the third carrier is configured to occupy one-port, determining that the carriers involved in the switching include: the third carrier used as a switched-from carrier and the second carrier used as the switched-to carrier; or, a first carrier in the first carrier set used as first switched-from carriers, the second carrier used as a first switched-to carrier, and the third carrier used as a second switched-from carrier and a first carrier in the second carrier set used as a second switched-to carrier.

Optionally, determining the carrier, involved in the switching, in the scheduled first carrier set for transmitting data before the switching and the scheduled second carrier set for transmitting data after the switching includes: in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured to occupy one port, determining that the carriers involved in the switching include: the third carrier used as a first switched-from carrier, the first carrier used as a first switched-to carrier, the fourth carrier used as a second switched-from carrier, and the second carrier used as a second switched-to carrier; or, the third carrier used as the first switched-from carrier, the second carrier used as the first switched-to carrier, the fourth carrier used as the second switched-from carrier, and the first carrier used as the second switched-to carrier.

Optionally, determining the carrier involved in the switching includes: determining carrier switching relationship between carriers in the first carrier set and carriers in the second carrier set; determining the carrier involved in the switching according to the carrier switching relationship.

Optionally, the carrier switching relationship includes at least one of the following information: correspondence between transmission channels used by different carriers to transmit data; a determined carrier switching pair including two carriers for performing the switching; a switching order among different carrier switching pairs.

Optionally, the carrier switching pair information includes: carrier information before the switching; carrier information after the switching; carrier switching information involved in the switching.

A terminal is provided in the embodiments of the present disclosure. The terminal includes a memory, a transceiver, a processor, wherein the memory is configured to store a computer program; the transceiver is configured to transmit and receive data under control of the processor; the processor is configured to read a computer program in the memory and perform the following operations: determining a carrier, involved in switching, in a first carrier set for transmitting data before the switching and a second carrier set for transmitting data after the switching, wherein each of the first carrier set and the second carrier set includes at least one carrier, and at least one carrier of carriers contained in the first carrier set is different from carriers contained in the second carrier set; wherein during carrier switching, the terminal does not transmit data on the carrier involved in the switching.

Optionally, a quantity of carriers that are different between the first carrier set and the second carrier set is greater than or equal to 3.

Optionally, the processor is configured to read the computer program in the memory and perform the following operations: when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching; using the determined switched-from carrier and the determined switched-to carrier as carriers involved in the switching.

Optionally, the processor is configured to read the computer program in the memory and perform the following operations: when the second carrier set includes a first carrier of a first band, the first carrier set includes a second carrier of a second band and a third carrier of a third band, and when each of the first carrier, the second carrier and the third carrier is configured for one-port transmission, determining the carrier involved in the switching includes: using the second carrier as the switched-from carrier, and using the first carrier as the switched-to carrier; or, using the third carrier as the switched-from carrier, and using the first carrier as the switched-to carrier.

Optionally, the processor is configured to read the computer program in the memory and perform the following operations: when the second carrier set includes a second carrier of a second band and a third carrier of a third band and the first carrier set includes a first carrier of a first band and when each of the second carrier, the third carrier and the first carrier is configured for one-port transmission, determining the carrier involved in the switching includes: using the first carrier as the switched-from carrier, and using the second carrier as the switched-to carrier; or, using the first carrier as the switched-from carrier, and using the third carrier as the switched-to carrier.

Optionally, the processor is configured to read the computer program in the memory and perform the following operations: when the second carrier set includes a first carrier of a first band and a second carrier of a second band and the first carrier set includes a first carrier of a first band and a third carrier of a third band and when each of the first carrier, the second carrier and the third carrier is configured for one-port transmission, determining the carrier involved in the switching includes: using the third carrier as the switched-from carrier, and using the second carrier as the switched-to carrier; or using the first carrier in the first carrier set as a first switched-from carrier, and using the second carrier as a first switched-to carrier, and using the third carrier as a second switched-from carrier and using the first carrier in the second carrier set as the second switched-to carrier.

Optionally, the processor is configured to read the computer program in the memory and perform the following operations: when the second carrier set includes a first carrier of a first band and a second carrier of a second band and the first carrier set includes a third carrier of a third band and a fourth carrier of a fourth band; and when each of the first carrier, the second carrier, the third carrier and the fourth carrier is configured for one-port transmission, determining the carrier involved in the switching includes: using the third carrier as a first switched-from carrier, using the first carrier as a first switched-to carrier, using the fourth carrier as a second switched-from carrier, and using the second carrier as a second switched-to carrier; or using the third carrier as a first switched-from carrier, using the second carrier as a first switched-to carrier, using the fourth carrier as a second switched-from carrier, and using the first carrier as a second switched-to carrier.

Optionally, the processor is configured to read the computer program in the memory and perform the following operations: determining carrier switching relationship between carriers in the first carrier set and carriers in the second carrier set; determining the carrier involved in the switching according to the carrier switching relationship.

Optionally, the carrier switching relationship comprises at least one of the following information: correspondence between transmission channels used by different carriers to transmit data; a determined carrier switching pair comprising two carriers for performing the switching; a switching order among different carrier switching pairs.

Optionally, the carrier switching relationship is determined by at least one of the following methods: determination based on preset carrier switching pair information; determination based on a rule of minimum signal loss; determination according to a scheduling signaling of downlink control information (DCI).

Optionally, the carrier switching pair information comprises: carrier information before the switching; carrier information after the switching; carrier switching information involved in the switching.

Optionally, the processor is configured to read the computer program in the memory and perform the following operations: determining a carrier switching group according to at least one carrier for transmitting data before the switching and at least one carrier for transmitting data after the switching, wherein the carrier switching group comprises a carrier before the switching and a carrier after the switching; determining a signal interruption duration when performing carrier switching of each carrier switching group; according to a rule that the signal interruption duration is shortest, determining the carrier switching group for involved in the switching.

Optionally, the scheduling signaling of the DCI carries a switching indicator, wherein the switching indicator comprises: a switched-to carrier involved in the switching, and a switched-from carrier used before the switching, wherein a transmission channel corresponding to the switched-from carrier is converted into a transmission channel corresponding to the switched-to carrier after the switching; or a switched-from carrier used before the switching, wherein the transmission channel corresponding to the switched-from carrier is converted into the transmission channel corresponding to the switched-to carrier after the switching.

A network-side device is provided in the embodiments of the present disclosure. The network-side device includes: a memory, a transceiver, a processor, wherein the memory is configured to store a computer program; the transceiver is configured to transmit and receive data under the control of the processor; the processor is configured to read the computer program in the memory and perform the following operations: determining by a network-side device a carrier, involved in switching, in a scheduled first carrier set for transmitting data before switching and a scheduled second carrier set for transmitting data after the switching, wherein each of the first carrier set and the second carrier set includes at least one carrier, and at least one carrier of carriers contained in the first carrier set is different from carriers contained in the second carrier set; wherein during carrier switching, the network-side device does not receive data on the carrier involved in the switching.

Optionally, a quantity of carriers contained in the first carrier set and the second carrier set and different between the first carrier set and the second carrier set is greater than or equal to 3.

Optionally, the processor is configured to read the computer program in the memory and perform the following operations: when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching; using the determined switched-from carrier and the determined switched-to carrier as carriers involved in the switching.

Optionally, the processor is configured to read the computer program in the memory and perform the following operations: in a case that the second carrier set includes a first carrier of a first band, the first carrier set includes a second carrier of a second band and a third carrier of a third band, and each of the first carrier, the second carrier, and the third carrier is configured for one-port transmission, determining that the carriers involved in switching include: the second carrier used as a switched-from carrier, and the first carrier used as the switched-to carrier; or, the third carrier used as a switched-from carrier, and the first carrier used as a switched-to carrier.

Optionally, the processor is configured to read the computer program in the memory and perform the following operations: in a case that the second carrier set includes a second carrier of a second band and a third carrier of a third band and the first carrier set includes a first carrier of a first band, and each of the second carrier, the third carrier, and the first carrier is configured for one-port transmission, determining that the carriers involved in switching include: the first carrier used as a switched-from carrier and the second carrier used as the switched-to carrier; or, the first carrier used as a switched-from carrier, and the third carrier used as a switched-to carrier.

Optionally, the processor is configured to read the computer program in the memory and perform the following operations: in a case that the second carrier set includes a first carrier of a first band and a second carrier of a second band, the first carrier set includes a first carrier of a first band and a third carrier of a third band, and each of the first carrier, the second carrier, and the third carrier is configured to occupy one-port, determining that the carriers involved in the switching include: the third carrier used as a switched-from carrier and the second carrier used as the switched-to carrier; or, a first carrier in the first carrier set used as first switched-from carriers, the second carrier used as a first switched-to carrier, and the third carrier used as a second switched-from carrier and a first carrier in the second carrier set used as a second switched-to carrier.

Optionally, the processor is configured to read the computer program in the memory and perform the following operations: in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured to occupy one port, determining that the carriers involved in the switching include: the third carrier used as a first switched-from carrier, the first carrier used as a first switched-to carrier, the fourth carrier used as a second switched-from carrier, and the second carrier used as a second switched-to carrier; or, the third carrier used as the first switched-from carrier, the second carrier used as the first switched-to carrier, the fourth carrier used as the second switched-from carrier, and the first carrier used as the second switched-to carrier.

Optionally, the processor is configured to read the computer program in the memory and perform the following operations: determining carrier switching relationship between carriers in the first carrier set and carriers in the second carrier set; determining the carrier involved in the switching according to the carrier switching relationship.

Optionally, the carrier switching relationship includes at least one of the following information: correspondence between transmission channels used by different carriers to transmit data; a determined carrier switching pair including two carriers for performing the switching; a switching order among different carrier switching pairs.

A carrier switching device applied to a terminal is provided in the embodiments of the present application. The device includes: a first determining unit configured to determine a carrier, involved in switching, in a first carrier set for transmitting data before the switching and a second carrier set for transmitting data after the switching, wherein each of the first carrier set and the second carrier set includes at least one carrier, and at least one carrier of carriers contained in the first carrier set is different from carriers contained in the second carrier set; a first processing unit configured to during carrier switching, not transmit data on the carrier involved in the switching.

A carrier switching device applied to a network side device is provided in the embodiments of the present application. The device includes: a second determining unit configured to determine a carrier, involved in switching, in a scheduled first carrier set for transmitting data before switching and a scheduled second carrier set for transmitting data after the switching, wherein each of the first carrier set and the second carrier set includes at least one carrier, and at least one carrier of carriers contained in the first carrier set is different from carriers contained in the second carrier set; a second processing unit, configured to during carrier switching, not receive data on the carrier involved in the switching.

A computer-readable storage medium on which a computer program is stored is provided in the embodiments of the present application, wherein when the computer program is executed by a processor, the processor implements a carrier switching method provided above.

A communication product on which a computer program is stored is provided in the embodiments of the present application, wherein when the computer program is executed by a processor, the processor implements a carrier switching method provided above.

A readable storage medium t on which a computer program is stored is provided in the embodiments of the present application, wherein when the computer program is executed by a processor, the processor implements a carrier switching method provided above.

A computer program product on which a computer program is stored is provided in the embodiments of the present application, wherein when the computer program is executed by a processor, the processor implements a carrier switching method provided above.

A chip on which a computer program is stored is provided in the embodiments of the present application, wherein when the computer program is executed by a processor, the processor implements a carrier switching method provided above.

The above technical solution of the present disclosure has the following beneficial effects:

in the embodiments of the present disclosure, when carrier switching is needed, a carrier needing to be involved in switching is determined from a first carrier set used for transmitting data before switching and a second carrier set used for transmitting data after switching, so that in the carrier switching time duration, the terminal does not transmit any data on the carrier involved in switching, so as to ensure that the multi-band carrier switching is effectively performed, and the carrier switching process can be applied to a carrier switching processes of 3 or more bands.

## BRIEF DESCRIPTION OF THE DRAWINGS

FIG. 1 shows a schematic diagram of switching between two carriers;
FIG. 2 shows a first schematic diagram of the time duration of carrier switching;
FIG. 3 shows a second schematic diagram of the time duration of carrier switching;
FIG. 4 is a schematic flowchart of a carrier switching method according to an embodiment of the present disclosure;
FIG. 5 shows a first carrier switching scenario according to an embodiment of the present disclosure;
FIG. 6 shows a second carrier switching scenario according to an embodiment of the present disclosure;
FIG. 7 shows a third carrier switching scenario according to an embodiment of the present disclosure;
FIG. 8 shows a fourth carrier switching scenario according to an embodiment of the present disclosure;
FIG. 9 is a second schematic flowchart of a carrier switching method according to an embodiment of the present disclosure;
FIG. 10 is a first schematic structural diagram of a carrier switching apparatus according to an embodiment of the present disclosure;
FIG. 11 is a second schematic structural diagram of a carrier switching apparatus according to an embodiment of the present disclosure;
FIG. 12 is a structural block diagram of a terminal according to an embodiment of the present disclosure;
FIG. 13 is a structural block diagram of a network side device according to an embodiment of the present disclosure.

## DETAILED DESCRIPTION

In order to make the technical problems, technical solutions and advantages to be solved by the present disclosure clearer, the following describes in detail with reference to the accompanying drawings and specific embodiments. In the following description, specific details such as specific configurations and components are provided merely to facilitate a thorough understanding of embodiments of the present disclosure. Therefore, those skilled in the art should understand that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present disclosure, it should be understood that the sequence numbers of the processes described below do not imply a sequence of execution, and the execution order of each process should be determined by its function and internal logic, and should not constitute any limitation on the implementation process of the embodiments of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In this embodiment of the present application, the term "a plurality of" means two or more, and other quantifiers are similar to each other.

The following clearly and completely describes the technical solutions in the embodiments of the present application with reference to the accompanying drawings in the embodiments of the present application. All other embodiments obtained by a person of ordinary skill in the art based on the embodiments of the present application without creative efforts shall fall within the protection scope of the present application.

When performing the description of the embodiments of the present disclosure, some concepts used in the following description are first explained.

I. Switching process between transmission carriers:

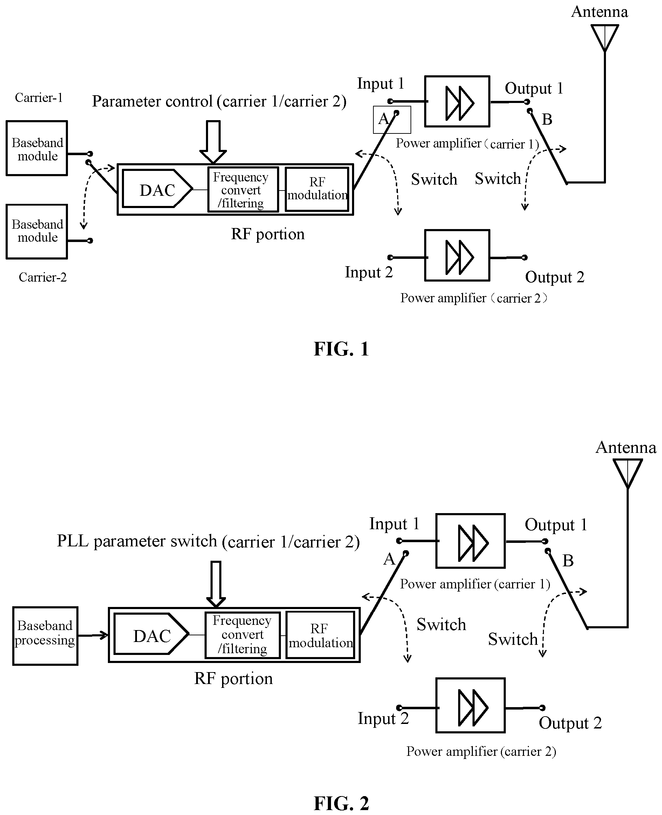

In the related art, uplink switching between two different carriers is shown in FIG. 1;

In the uplink communication of the terminal, it is possible to switch between carriers; when a signal or a channel is transmitted on the carrier 1, the control parameter of the radio frequency (RF) adopts a correlation value of the carrier 1, and the output point A of the RF part is switched to the power amplifier input point 1 of the carrier 1. Meanwhile, the power amplifier output 1 is switched to the antenna B.

When a signal or a channel is transmitted on the carrier 2, the control parameter of the RF adopts a correlation value of carrier 2, the output point A of the RF part is switched to the power amplifier input point 2 of the carrier 2, and meanwhile, the power amplifier output 2 is switched to the antenna B.

II. Switching duration between transmission carriers:

When switching the carrier transmission, during carrier switching, the terminal needs to terminate transmission, that is, the switching time duration (SwitchingTime) is needed, and the switching time duration may be represented by time, such as {35 us, 140 us, 210 us}, or the number of symbols; for example, in the case of SCS = 30 kHz, the number of switching symbols is {1, 4, 6} symbols.

Further, the value of the switching time duration depends on the implementation structure of the terminal. That is, the more devices shared among different carriers, the longer the time needed to switch, and vice versa. As shown in FIG. 2, the terminal structure is that each of the power amplifiers (PA) of the carrier 1 and the carrier 2 is independent, and one set of RF device is shared, so that the time duration of carrier switching is mainly switching of a Phase Locked Loop (PLL) parameter and about 35 microseconds.

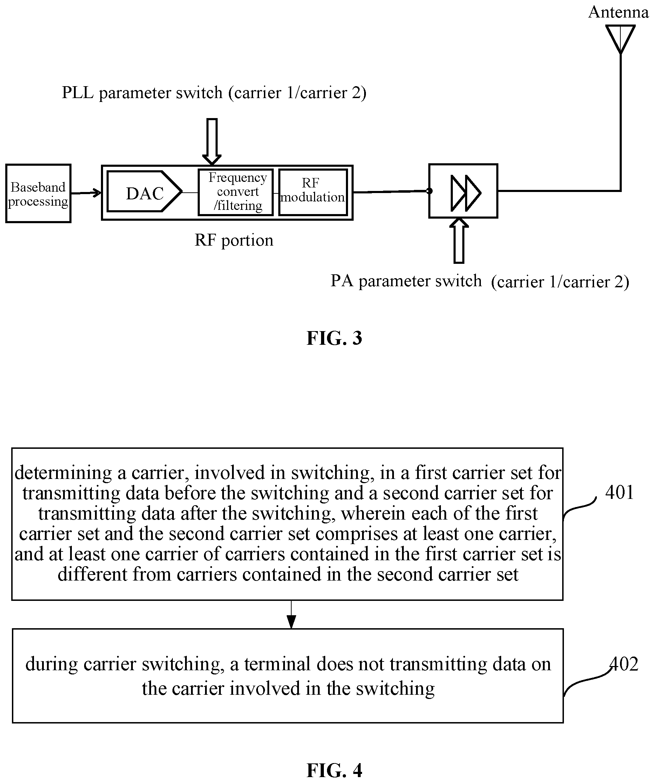

As shown in FIG. 3, the terminal structure is that: carrier 1 and carrier 2 share a set of PAs, and share a set of RF devices, so that the time duration of carrier switching is that PA parameter switching needs to be about 140 microseconds, PLL parameter switching needs to be about 35 microseconds, the maximum value between the PA parameter switching and the PLL parameter switching is taken, and the time length of carrier switching on the terminal is 140 microseconds.

III. Carrier switching between the two bands, and a "concurrent uplink" mode supports the following scenarios:

TABLE 1. Two-Band "Concurrent Uplink" switching scenarios

|  | Number of Tx channels (c1 + c2) | Number of antenna ports (c1+c2) |
|---|---|---|
| Case 1 | 1T+1T | 1P+0P, 1P+1P, 0P+1P |
| Case 2 | 0T+2T | 0P+2P, 0P+1P |
| Case 3 | 2T+0T | 2P+0P, 1P+0P |

In Table 1, c1 represents carrier-1 on band-1; c2 represents carrier-2 on band-2;

0T represents transmission of 0 Tx channel (uplink transmission unit); 1T represents transmission of one Tx channel (uplink transmission unit), and so on;
0P represents transmission of 0 antenna port (not transmitting any information, but actually possibly being allocated with a Tx channel); 1P represents transmission of one antenna port (transmitting information, at least transmission of one Tx channel), and 2P represents transmission of two antenna ports (transmitting information and transmission of two Tx channels);

In Table 1, two carriers on two bands are defined, and c1/22 and parameters in various cases are in one-to-one correspondence, for example, 0P +1P in Case -1 is taken as an example which indicates 1 Tx channel (1T) is allocated on carrier-1, but no signal/data (0P) is sent; and indicates one Tx channel (1T) is allocated on carrier-2, and carrier-2 uses one port to transmit signal/data (1P).

The "concurrent uplink" mode refers to that the terminal can transmit signal/channel data on two carriers on two bands; for example, signal/channel data can be transmitted on carrier-1 of band-1, and signal/channel data is transmitted on carrier-2 of band-2.

The "switching uplink" mode refers to that the terminal can only transmit signal/channel data on a carrier (such as carrier-1) on one band (for example, band-1). When signal/channel data needs to be transmitted on a carrier (such as carrier-2) on another band (for example, band-2), transmission on band-1 needs to be stopped.

Specifically, an embodiment of the present disclosure provides a carrier switching method, which solves the problem that the related carrier switching method is not applicable to switching scenarios of three or more carriers.

It should be noted that, in the embodiments of the present disclosure, the transmitting data or the transmitting signal generally refers to any information transmission that may be performed by the communication device, the transmitted data or signal includes but is not limited to: control information, data information, other pilot signals, or detection signals.

As shown in FIG. 4, an embodiment of the present disclosure provides a carrier switching method, applied to a terminal, and specifically includes the following steps:

Step 401: determining a carrier, involved in switching, from a first carrier set for transmitting data before switching and a second carrier set for transmitting data after the switching, where the first carrier set and the second carrier set respectively include at least one carrier, and at least one carrier included in the first carrier set is different from a carrier included in the second carrier set.

In this embodiment, the network side device may schedule the terminal to transmit data on a corresponding carrier, and if the carriers scheduled in two scheduling are different, the terminal may need to perform carrier switching. The first carrier set is a set of carriers used for transmitting data before the terminal performs carrier switching, and the second carrier set is a set of carriers for transmitting data after the terminal performs carrier switching.

For example, before the first time instant, the terminal has transmitted data on a carrier included in the first carrier set, and according to the scheduling signaling of the network side device, the terminal needs to transmit data on the second carrier set at the first time instant, and then the terminal needs to switch from the first carrier set to the second carrier set, and transmit data, and when the carrier in the first carrier set is switched to the carrier in the second carrier set, the time duration of carrier switching is required.

The first carrier set may include one or more carriers, the second carrier set may include one or more carriers, some carriers may exist both in the first carrier set and in the second carrier set, for example, the first carrier set includes a carrier 2 and a carrier 3, and the second carrier set includes a carrier 1 and a carrier 2. The carriers involved in the switching may include multiple cases, for example:

    1) the carrier 3 is switched to the carrier 1, and the carrier 2 is not switched;
    2) the carrier 2 is switched to the carrier 1, and the carrier 3 is switched to the carrier 2.

It should be noted that the first time instant when the terminal performs carrier switching may include a plurality of time instants, and the embodiments of the present application are only used to indicate a time instant when the terminal needs to transmit data after performing the switching, for example, the terminal is about to transmit data on the first carrier at the time instant T0, and is about to transmit data on the second carrier at the time instant T1, and the time instant T0 and the time instant T1 are both the first time instant. A time instant before the first time instant is a time instant when the terminal receives data scheduling signaling but has not yet transmitted data.

Step 402: In the carrier switching time duration, the terminal does not transmit data on the carrier involved in the switching;

The carrier switching time duration is a duration in which the terminal switches from a carrier in the first carrier set to a carrier in the second carrier set. When carrier switching is performed, a transmission channel needs to be switched. Because at least one different carrier exists in the first carrier set and in the second carrier set, carrier switching time duration is required during carrier switching. Within the carrier switching time duration, on a carrier involved in switching, the terminal does not transmit any data to ensure normal execution of carrier switching.

In the embodiments of the present disclosure, the carrier that needs to be involved in the switching is determined from the first carrier set used for transmitting data before the switching and the second carrier set used for transmitting data after the switching, so that the terminal does not transmit any data on the carrier involved in the switching within the carrier switching time duration, so as to ensure the effective implementation of the multi-band carrier switching, and can be applied to the carrier switching process in three bands and more.

Optionally, the number of antenna ports configured for the carriers included in the first carrier set is the same as the number of antenna ports configured for the carriers included in the second carrier set. Optionally, a value of the number is 1.

In this embodiment, in the embodiments of the present disclosure, the number of the antenna ports configured for each carrier in the first carrier set and the number of the antenna ports configured for each carrier in the second carrier set may be the same. For example, the first carrier set includes a carrier 1 and a carrier 2, the second carrier set includes a carrier 3 and a carrier 4, and the numbers of antenna ports configured for the carrier 1, the carrier 2, the carrier 3, and the carrier 4 are the same, for example, each of the carrier 1, the carrier 2, the carrier 3, and the carrier 4 are configured with one port.

Optionally, a quantity of different carriers included in the first carrier set and the second carrier set is greater than or equal to 3

For example, the first carrier set includes a carrier 3, the second carrier set includes a carrier 1 and a carrier 2, and the different carriers between the first carrier set and the second carrier set are 3 carriers which are carrier 1, carrier 2, and carrier 3; or, the first carrier set includes a carrier 1 and a carrier 3, the second carrier set includes a carrier 1 and a carrier 2, there are two identical carriers 1 between the first carrier set and the second carrier set, and thus only one carrier 1 is calculated, and then different carriers between the first carrier set and the second carrier set are 3 carriers which are 1 carrier 1, carrier 2, and carrier 3; or, the first carrier set includes carrier 1 and carrier 2, the second carrier set includes carrier 3 and carrier 4, and different carriers between the first carrier set and the second carrier set are 4 carriers which are carrier 1 to carrier 4; or, the first carrier set includes carrier 2, carrier 3, and carrier 4, and the second carrier set includes carrier 1, then, different carriers between the first carrier set and the second carrier set are four carriers which are carrier 1 to carrier 4; other cases are similar to the above and are not listed one by one herein.

Optionally, the terminal determines the first carrier set and/or the second carrier set based on scheduling signaling of the network side device or a higher layer configuration message.

In the first carrier set and the second carrier set, the number of different carriers included in the first carrier set and the second carrier set is greater than or equal to 3, which can ensure that the embodiments of the present disclosure are applicable to a carrier switching process in 3 bands or more bands.

Optionally, a quantity of bands corresponding to carriers included in the first carrier set and the second carrier set is greater than 2.

For example, the first carrier set includes a first carrier of a first band and a second carrier of a second band; the second carrier set includes a second carrier of a second band and a third carrier of a third band, and the number of bands included in the first carrier set and the second carrier set is three which are a first band, a second band, and a third band; for another example, the first carrier set includes a first carrier of a first band and a second carrier of a second band, the second carrier set includes a third carrier of a third band and a fourth carrier of a fourth band, and the number of bands included in the first carrier set and the second carrier set is four which are a first band, a second band, a third band, and a fourth band.

In this embodiment, the number of bands corresponding to the carriers included in the first carrier set and the second carrier set is greater than 2, which can ensure that the carrier switching method in the embodiments of the present disclosure is applicable to a band carrier switching process in three bands and more bands.

In an optional embodiment, the determining, a carrier involved in switching, from a first carrier set for transmitting data before switching and a second carrier set for transmitting data after switching includes:

in a case that each carrier included in the first carrier set is configured for one-port transmission and each carrier included in the second carrier set is also configured for one-port transmission respectively, determining one carrier from the first carrier set as a switched-from carrier involved in switching, and determining one carrier from the second carrier set as a switched-to carrier involved in switching;

taking the determined switched-from carrier and the determined switched-to carrier as the carriers involved in switching.

In this embodiment, in a case that the terminal transmit data using one antenna port on each carrier before the carrier switching and after the carrier switching, that is, in the case that the terminal occupies one transmission channel on each carrier to transmit data, a correspondence in the carrier switching is determined according to carriers included in the first carrier set and carriers included in the second carrier set, that is, it is determined which carrier in the first carrier set is handed over to which carrier in the second carrier set, and the carrier before switching and the carrier after the switching are carriers involved in switching. For example, the first carrier set includes a carrier 1 and a carrier 3, the second carrier set includes a carrier 1 and a carrier 2, it may be determined that the carrier 3 is switched to the carrier 2, and the carrier 1 is not switched, the carrier involved in switching is carrier 3 and carrier 2

Using the switching between the three bands as an example, the carrier switching situation in the terminal supporting the "concurrent uplink" mode is shown in Table 2:

Table 2: "Concurrent Uplink" mode (3 bands and 3 carriers)

| Scene | number of Tx channels (c1 + c2+c3) | Number of antenna ports (c1+c2+c3) |
|---|---|---|
| Case 1 | 0T+1T+ 1T | A1={0P+0P+1P},A2={0P+1P+0P},A3={0P+1P+1P} |
| Case 2 | 1T+0T+ 1T | A1={0P+0P+1P},A4={1P+0P+0P},A5={1P+0P+1P} |
| Case 3 | 1T+1T+ 0T | A2={0P+1P+0P},A4={1P+0P+0P},A6={1P+1P+0P} |
| Case 4 | 0T+0T+ 2T | B1={0P+0P+2P},A1={0P+0P+1P} |

(continued)

| Scene | number of Tx channels (c1 + c2+c3) | Number of antenna ports (c1+c2+c3) |
|---|---|---|
| Case 5 | 0T+2T+ 0T | B2={0P+2P+0P},A2={0P+1P+0P} |
| Case 6 | 2T+0T+ 0T | B4={2P+0P+0P},A4={1P+0P+0P} |

In Table 2, c1 represents carrier-1 on band-1; c2 represents carrier-2 on band-2; c3 represents carrier-3 on band-3;

0T represents transmission of 0 transmission channel (an uplink transmission unit; 1T represents transmission of one transmission channel (an uplink transmission unit), 2T represents transmission of two transmission channels, and so on;
0P represents transmission of 0 antenna port (not transmitting any information, but actually not using any Tx channel), 1P represents transmission of one antenna port (transmitting information, at least transmission of one Tx channel), and 2P represents transmission of two antenna ports (transmitting information, at least transmission of two Tx channels);

In the three carriers in the three bands in Table 2, the parameters in c1/c2/c3 are in one-to-one correspondence with the parameters in various cases. Using A1 = {0P +0P +1P} in case-1 as an example:

A1 indicates that no Tx channel (0T) is allocated on carrier-1, and no signal/data (0P) is transmitted;
One Tx channel (1T) is allocated on Carrier-2, but carrier-2 does not transmit any signal/data (0P);

It indicates that one Tx channel (1T) is allocated on carrier-3, and carrier-3 uses one port to transmit signal/data (0P).

Using the switching among the four bands as an example, the carrier switching situation included in the terminal supporting the "concurrent uplink" mode is shown in Table 3:

Table 3: "Concurrent Uplink" mode (4 bands and 4 carriers)

| Scene | Number of Tx channels (c1+c2+c3+c4) | Number of antenna ports (c1+c2+c3+c4) |
|---|---|---|
| Case 1 | 0T+0T+1T+1T | A1={0P+0P+0P+1P},A2={0P+0P+1P+0P}, A3={0P+0P+1P+1P} |
| Case 2 | 0T+1T+0T+1T | A1={0P+0P+0P+1P},A4={0P+1P+0P+0P}, A5={0P+1P+0P+1P} |
| Case 3 | 0T+1T+1T+0T | A2={0P+0P+1P+0P},A4={0P+1P+0P+0P}, A6={0P+1P+1P+0P} |
| Case 4 | 1T+1T+0T+0T | A4={0P+1P+0P+0P},A8={1P+0P+0P+0P}, A12={1P+1P+0P+0P} |
| Case 5 | 1T+0T+1T+0T | A2={0P+0P+1P+0P},A8={1P+0P+0P+0P}, A10={1P+0P+1P+0P} |
| Case 6 | 1T+0T+0T+1T | A1={0P+0P+0P+1P},A8={1P+0P+0P+0P}, A9={1P+0P+0P+1P} |
| Case 7 | 0T+0T+0T+2T | B1={0P+0P+0P+2P},A1={0P+0P+0P+1P} |
| Case 8 | 0T+0T+2T+0T | B2={0P+0P+2P+0P},A2={0P+0P+1P+0P} |
| Case 9 | 0T+2T+0T+0T | B4={0P+2P+0P+0P},A4={0P+1P+0P+0P} |
| Case 10 | 2T+0T+0T+0T | B8={2P+0P+0P+0P},A8={1P+0P+0P+0P} |

The meaning of each parameter in Table 3 is similar to the meaning of the parameter of 3 bands and 3 carriers in Table 2, and details are not described herein again. For example, A5 = {0P +1P +0P +1P}: the A5 indicates that no Tx channel (0T) is allocated on carrier-1, and no signal/data (0P) is sent; one Tx channel (1T) is allocated on Carrier-2, and Carrier-2 uses one port to transmit signal/data (1P); no Tx channel (0T) is allocated on carrier-3 while no signal/data (0P) is transmitted; one Tx channel (1T) is allocated on Carrier-4, and carrier-2 uses one port to transmit signal/data (1P).

For the switching among the 3 bands and 3 carriers in Table 2 and the switching among the 4 bands and 4 carriers in Table 3, there may be multiple switching scenarios, and carriers involved in the switching in different switching scenarios may also be different.

The following describes a process of determining, by a terminal of the present application, one or more carriers involved in the switching according to a specific embodiment.

In an optional embodiment, the determining, a carrier involved in switching, from a first carrier set for transmitting data before switching and a second carrier set for transmitting data after switching includes:

in a case that the second carrier set includes a first carrier of a first band, the first carrier set includes a second carrier of a second band and a third carrier of a third band, and the first carrier, the second carrier, and the third carrier are configured for one-port transmission respectively, determining that the carrier involved in switching includes: the second carrier used as a switched-from carrier and the first carrier used as the switched-to carrier; or, the third carrier used as a switched-from carrier, and the first carrier used as a switched-to carrier.

In this embodiment, if the second carrier set includes the first carrier of the first band, the first carrier set includes the second carrier of the second band and the third carrier of the third band, and the network side or the higher layer signaling configures that each carrier occupies one antenna port, that is, each carrier occupies one transmission channel to transmit data, it may be determined that the terminal performs carrier switching, that is, the carrier set (including carrier 2 and carrier 3) needs to be switched to the carrier set (including carrier 1), then when performing the carrier switching, the carrier 2 may be switched to the carrier 1, or the carrier 3 is switched to the carrier 1.

Optionally, when the network side device or the higher layer signaling performs data scheduling, a time instant at which the terminal transmits data on each carrier may be indicated.

For example, if the terminal is about to transmit data on the first carrier of the first band by using one antenna port at the first time instant (that is, after the carrier switching, the terminal transmits data on the first carrier of the first band at the first time instant); and before the first time instant, the terminal transmits data on a second carrier of a second band through using one port, and transmits data on a third carrier of a third band through one port; and it is determined that the carrier involved in switching includes: the second carrier used as a switched-from carrier and the first carrier used as the switched-to carrier; or, the third carrier used as a switched-from carrier, and the first carrier used as a switched-to carrier.

In this example, if the terminal determines, according to the scheduling signaling or the higher layer configuration of the network side device, that data is to be transmitted on the first carrier of the first band at the first time instant by using one port, and the terminal determines that data is currently transmitted through one port on the second carrier of the second band based on the scheduling signaling or the higher layer configuration of the network side device, and determines that data is currently transmitted through one port on the third carrier of the third band, then it may be determined that the terminal needs to switch to the first carrier of the first band from the second carrier of the second band and the third carrier of the third band and transmit data at the first time instant. Specifically, the second carrier may be switched to the first carrier to transmit data on the first carrier, or the third carrier may be switched to the first carrier to transmit data on the first carrier.

In a carrier switching process, the terminal does not transmit data on a carrier involved in switching, for example, if the second carrier is switched to the first carrier, the terminal does not transmit data on the first carrier and the second carrier in the switching process; and if the third carrier is switched to the first carrier, the terminal does not transmit data on the first carrier and the third carrier in the switching process. In this embodiment, the first carrier, the second carrier, and the third carrier are different carriers in different bands.

Taking 3 bands and 3 carriers as an example, for a 3-band carrier switching scenario, referring to Table 2, it is assumed that a carrier before switching is different from a carrier after the switching, a scenario in which carrier switching needs to be performed is as follows:

1) switching between case 1-A3 and case 2-A4;
2) switching between case 1-A3 and case 3-A4;
3) switching between case 2-A5 and case 1-A2;
4) switching between case 2-A5 and case 3-A2;
5) switching between case 3-A6 and case 1-A1;
6) case 3-A6 and case 2-A1.

The foregoing switching scenario is shown in Table 4.

TABLE 4: 1 Tx -1 Tx Switching Scenario in 3-Band 3 Carrier

| Scene | Number of Tx channels (c1 + c2+c3) | Number of antenna ports (c1+c2+c3) |
|---|---|---|
| Case 1 | 0T+1T+1T | A1={0P+0P+1P},A2={0P+1P+0P},A3={0P+1P+1P} |
| Case 2 | 1T+0T+1T | A1={0P+0P+1P},A4={1P+0P+0P},A5={1P+0P+1P} |
| Case 3 | 1T+1T+0T | A2={0P+1P+0P},A4={1P+0P+0P},A6={1P+1P+0P} |

In the above switching scenario, when performing carrier switching at the time instant T0 by the terminal specifically includes:

the terminal determines, based on the scheduling signaling 2 of the network-side device or the higher-layer information 2, that before (before switching) the time instant T0, the terminal uses simultaneously the "1 antenna port (A)" to transmit information on the second carrier of the second band and uses the "1 antenna port (B)" to transmit information on the third carrier of the third band.

The terminal determines, based on the scheduling signaling 1 of the network-side device or the higher-layer configuration message 1, that at the time instant T0 (after switching), the terminal uses one antenna port to transmit information on the first carrier in the first band.

Then, in the switching process, the terminal determines to use the transmission channel of the antenna port A (that is, the transmission channel of the second carrier) to transmit information on the first carrier of the first band after the switching, or determines to use the transmission channel of the antenna port B (i.e. the transmission channel of the third carrier) to transmit information on the first carrier of the first band after the switching. Meanwhile, during the transmission channel of the second carrier or the third carrier being switched to the first carrier, the terminal does not transmit information on any carrier involved in switching of the transmission channel. The information contains any signal or channel.

Taking A3 being switched to A4 as an example, A3 = {0P +1P +1P}, A4 = {1P +0P +0P}, therefore, the terminal needs to switch from c2 and c3 to c1, and if it is determined that the terminal uses the transmission channel of the antenna port A (i.e. the transmission channel of c2) to transmit information on c1 after the switching, that is, during the switching, the terminal does not transmit information on the transmission channel of the antenna port A, then the terminal transmits information on the carrier c2 using the transmission channel of the antenna port A at the time instant T0; if it is determined that the transmission channel of the antenna port B is used after the switching (i.e. the transmission channel of the C3) to transmit information on the C1, that is, during the switching, the terminal does not transmit information on the transmission channel of the antenna port B, then at the time instant T 0, the transmission channel of the antenna port B is used to transmit the information on the c1.

In an optional embodiment, the determining, a carrier involved in switching, from a first carrier set for transmitting data before switching and a second carrier set for transmitting data after switching, includes:
in a case that the second carrier set includes a second carrier of a second band and a third carrier of a third band and the first carrier set includes a first carrier of a first band, and each of the second carrier, the third carrier, and the first carrier is configured for one-port transmission respectively, determining that the carrier involved in switching includes the first carrier used as a switched-from carrier and the second carrier used as the switched-to carrier; or, the first carrier used as a switched-from carrier, and the third carrier used as a switched-to carrier.

In this embodiment, if the second carrier set includes the second carrier of the second band and the third carrier of the third band and the first carrier set includes the first carrier in the first band, and the network side or the higher layer signaling configures that each carrier occupies one antenna port, that is, each carrier occupies one transmission channel to transmit data, it may be determined that the terminal needs to switch from the carrier set (carrier 1) to the carrier set (carrier 2, carrier 3), and when carrier switching is performed, carrier 1 may be switched to carrier 2, or carrier 1 is switched to carrier 3

Optionally, when the network side device or the higher layer signaling performs data scheduling, a time instant at which the terminal transmits data on each carrier may be indicated.

For example, if the terminal is about to transmit data on the second carrier of the second band at the first time instant through one antenna port, and data is transmitted on the third carrier of the third band through one antenna port; before the first time instant, the terminal transmits data on a first carrier of a first band through one port; then it is determined that the carrier involved in the switching includes: the first carrier being switched to the second carrier; or the first carrier being switched to the third carrier.

In this embodiment, if the terminal determines, based on the scheduling signaling or the high-layer configuration of the network-side device, that data is to be transmitted on the second carrier of the second band at the first time instant through one port, and the terminal transmits data through one port on the third carrier of the third band, and the terminal determines that data has been transmitted on the first carrier of the first band through one port according to the scheduling signaling or the higher-layer configuration of the network-side device, it can be determined that the terminal needs to switch to the second carrier of the second band and the third carrier of the third band to transmit data at the first time instant. Specifically, the first carrier may be switched to the second carrier to transmit data on the second carrier, or may be switched from the first carrier to the third carrier to transmit data on the third carrier.

In a carrier switching process, the terminal does not transmit data on a carrier involved in switching, that is, the terminal does not transmit data on the first carrier and the second carrier, or does not transmit data on the first carrier and the third carrier.

As shown in Table 4, taking the switching of A4 to A3 as an example, A3 = {0P +1P +1P}, A4 = {1P +0P +0P}, and therefore, the terminal needs to be switched from c1 to c2 and c3, and may be switching between c1 and c2, or switching between c1 and c3.

In an optional embodiment, the determining, a carrier involved in switching, from a first carrier set for transmitting data before switching and a second carrier set for transmitting data after switching, includes:
in a case that the second carrier set includes a first carrier of a first band and a second carrier of a second band, the first carrier set includes a first carrier of a first band and a third carrier of a third band; and where the first carrier, the second carrier, and the third carrier are respectively configured for one-port transmission, determining that the carrier involved in the switching includes the third carrier used as a switched-from carrier and the second carrier used as the switched-to carrier; or, a first carrier in the first carrier set used as a first switched-from carrier, the second carrier used as a first switched-to carrier, and the third carrier used as a second switched-from carrier and a first carrier in the second carrier set used as a second switched-to carrier.

In this embodiment, if the second carrier set includes the first carrier in the first band and the second carrier in the second band, the first carrier set includes the first carrier in the first band and the third carrier in the third band, and the network side or the higher layer signaling configures that each carrier occupies one antenna port, that is, each carrier occupies one transmission channel to transmit data, it may be determined that the terminal needs to switch from the carrier set (carrier 1, carrier 3) to the carrier set (carrier 1, carrier 2) and during the carrier switching, the carrier may be switched to the carrier 2 and the carrier 1 is not switched; or the carrier 1 is switched to the carrier 2 and the carrier 3 is switched to carrier 1.

Optionally, when the network side device or the higher layer signaling performs data scheduling, a time instant at which the terminal transmits data on each carrier may be indicated. If the terminal is about to transmit data through one antenna port on the first carrier of the first band at the first time instant, and data is to be transmitted on the second carrier of the second band through one antenna port; before the first time instant, the terminal transmits data on a first carrier of a first band through one port, and transmits data on a third carrier of a third band through one antenna port; then it is determined that the carrier involved in switching includes the second carrier being switched to the third carrier; or the first carrier before switching being switched to the second carrier, and the third carrier before switching being switched to the second carrier.

In this embodiment, in the carriers before and after the switching, some carriers are the same, for example, the first carrier set before the switching includes: carrier 1 and carrier 3, and the second carrier set after the switching includes carrier 1 and carrier 2: the carrier 1 and carrier 2 may include two switching cases: (1): carrier 1 is not switched, and carrier 3 and carrier 2 are switched; (2): the carrier 1 before switching is switched to the carrier 2, the carrier 3 before switching is switched to the carrier 1, and in the carrier switching process, the terminal does not transmit any information on the carrier involved in the switching.

Taking 3 bands and 3 carriers as an example, for a 3-band carrier switching scenario, referring to Table 2, it is assumed that a carrier before switching is different from a carrier after switching, a scenario in which carrier switching time duration is required is as follows:

1) switching between Case 1-A3 and Case 2-A5;
2) switching between Case 2-A5 and Case 3-A6;
3) switching between Case 1-A3 and Case 3-A6;

The foregoing three switching scenarios are shown in Table 5.

TABLE 5: 1Tx -1Tx switching scenario in 3 bands and 3 carriers

| Scene | Number of Tx channels (c1 + c2+c3) | Number of antenna ports (c1+c2+c3) |
|---|---|---|
| Case 1 | 0T+1T+1T | A1={0P+0P+1P},A2={0P+1P+0P},A3={0P+1P+1P} |
| Case 2 | 1T+0T+1T | A1={0P+0P+1P},A4={1P+0P+0P},A5={1P+0P+1P} |
| Case 3 | 1T+1T+0T | A2={0P+1P+0P},A4={1P+0P+0P},A6={1P+1P+0P} |

When performing carrier switching, the terminal performs following:

the terminal determines according to the scheduling signaling 1 or the high-level configuration message 1 of the network-side device that at a time instant T0 (after switching), using one antenna port (A) to transmit information on the first carrier of the first band; at the time instant T1, using one antenna port (C) to transmit information on the second carrier of the second band;

the terminal determines, according to the scheduling signaling 2 or the higher layer information 2, that before the time instant T0 and the time instant T1, if the terminal simultaneously uses the " 1 antenna port (A)" to transmit information on the first carrier of the first band and uses the " 1 antenna port (B)" to transmit information on the third carrier of the third band; then, the terminal may determine, based on the scheduling signaling or the high-layer configuration information, that the first carrier and the third carrier need to be switched to the first carrier and the second carrier to transmit information. That is, carrier switching is performed between the third carrier and the second carrier without changing data transmission on the first carrier (i.e., the first carrier being not switched), i.e., the transmission channel of the third carrier may be used to transmit information on the second carrier; or switching between the first carrier (before switching) and the second carrier may be implemented, and switching between the third carrier and the first carrier (after switching) is implemented, that is, information is transmitted on the second carrier by using the transmission channel of the first carrier, and information is transmitted on the first carrier by using the transmission channel of the third carrier. Specifically:

After the time instant T0 or T1, the terminal may transmit carrier information by using one of the following methods:

method 1:

using a Tx channel of" 1 antenna port A" to transmit information on a first carrier in a first band (without carrier switching);
using a Tx channel of "1 antenna port B" to transmit information on the second carrier in the second band (the third carrier is switched to the second carrier).

method 2:

using a Tx channel of "1 antenna port A" to transmit information on the second carrier in the second band (the first carrier is switched to the second carrier);
using a Tx channel of "1 antenna port B" to transmit information on the first carrier in the first band (the third carrier is switched to the first carrier).

During the carrier switching, the terminal does not transmit information on the carrier involved in the switching.

Taking the switching scenario of A3 to A5 as an example, A3 = {0P +1P +1P}, A5 = {1P +0P +1P}, then the first carrier is c3, the second carrier is c1, the third carrier is c2. The terminal is to switch from A3 to A5, c3 is not switched, c2 is switched to c1, that is, c2 and c1 are carriers involved in switching; or c2 and c3 are switched, c3 and c1 are switched, c1, c2, and c3 are all carriers involved in switching, and in the corresponding carrier switching process, the terminal does not transmit any information on c1, c2, or c3.

In an optional embodiment, the determining, a carrier involved in switching, from a first carrier set for transmitting data before switching and a second carrier set for transmitting data after switching includes:

in a case that the second carrier set includes a first carrier of a first band and a second carrier of a second band, the first carrier set includes a third carrier of a third band and a fourth carrier of a fourth band; and the first carrier, the second carrier, the third carrier, and the fourth carrier are respectively configured for one-port transmission, determining that the carrier involved in the switching includes:
the third carrier used as a first switched-from carrier, the first carrier used as a first switched-to carrier, the fourth carrier used as a second switched-from carrier, and the second carrier used as a second switched-to carrier;
or, the third carrier used as the first switched-from carrier, the second carrier used as the first switched-to carrier, the fourth carrier used as the second switched-from carrier, and the first carrier used as the second switched-to carrier.

In this embodiment, if the second carrier set includes the first carrier of the first band and the second carrier of the second band, the first carrier set includes the third carrier of the third band and the fourth carrier of the fourth band, and the network side or the higher layer signaling configures that each carrier occupies one antenna port, that is, each carrier occupies one transmission channel to transmit data, then it may be determined that the terminal needs to switch from the carrier set (carrier 3, carrier 4) to the carrier set (carrier 1, carrier 2), and when carrier switching is performed, carrier 3 may be switched to carrier 1, and carrier 4 is switched to carrier 2; or, the carrier 3 is switched to the carrier 2, and the carrier 4 is switched to the carrier 1.

Optionally, when the network side device or the higher layer signaling performs data scheduling, a time instant at which the terminal transmits data on each carrier may be indicated.

For example, if the terminal is about to transmit data on a first carrier of a first band through one antenna port at a first time instant, and data is transmitted on a second carrier of a second band through one antenna port; before the first time instant, the terminal transmits data on a third carrier of a third band through one port, and transmits data on a fourth carrier of a fourth band through one port;
then it may be determined that the carrier involved in the switching includes: the third carrier being switched to the first carrier, and the fourth carrier being switched to a second carrier; or the third carrier being switched to the second carrier, and the fourth carrier being switched to the first carrier.

In this embodiment, when carrier switching is performed, four carriers in four bands are involved, and the carriers before switching and the carriers after switching are different, and when the carrier switching is performed, the four carriers are all involved in the switching, and in the switching process, the terminal does not transmit any information on the 4 carriers.

Taking 4 bands and 4 carrier as an example, for a 4-band carrier switching scenario, referring to Table 3, it is assumed that the carriers before switching are completely different from the carriers after switching, a scenario in which carrier switching time duration is required is as follows:

1) switching between case 1-A 3 and case 4-A 12;
2) switching between case 2-A 5 and case 5-A 10;
3) switching between case 3-A 6 and case 6-A 9;

The foregoing three switching scenarios are shown in Table 6.

Table 6: "concurrent uplink" mode (4 bands and 4 carriers)

| Scene | Number of Tx channels ($c1+c2+c3+c4$) | Number of antenna ports ($c1+c2+c3+c4$) |
|---|---|---|
| Case 1 | 0T+0T+1T+1T | A1={0P+0P+0P+1P},A2={0P+0P+1P+0P}, A3={0P+0P+1P+1P} |
| Case 2 | 0T+1T+0T+1T | A1={0P+0P+0P+1P},A4={0P+1P+0P+0P}, A5={0P+1P+0P+1P} |
| Case 3 | 0T+1T+1T+0T | A2={0P+0P+1P+0P},A4={0P+1P+0P+0P}, A6={0P+1P+1P+0P} |
| Case 4 | 1T+1T+0T+0T | A4={0P+1P+0P+0P},A8={1P+0P+0P+0P}, A12={1P+1P+0P+0P} |
| Case 5 | 1T+0T+1T+0T | A2={0P+0P+1P+0P},A8={1P+0P+0P+0P}, A10={1P+0P+1P+0P} |
| Case 6 | 1T+0T+0T+1T | A1={0P+0P+0P+1P},A8={1P+0P+0P+0P}, A9={1P+0P+0P+1P} |

When performing the carrier switching of the foregoing scenario 3, the terminal performs the following steps:

the terminal determines according to the scheduling signaling 1 or the higher layer configuration message 1 that: at the time instant T0, information is transmitted on the first carrier of the first band by using the 1 antenna port; and at the time instant T1, information is transmitted on the second carrier of the second band by using the 1 antenna port;
the terminal determines, based on the scheduling signaling 2 or the high-layer information 2, that before the time instant T0 and the time instant T1, if the terminal simultaneously uses the "1 antenna port A" to transmit information on the third carrier of the third band and uses the "1 antenna port B" to transmit the information on the fourth carrier of the fourth band.

Then, after the time instant T0 or T1, the terminal may transmit carrier information by using one of the following methods:

Method 1:

using a Tx channel of "one antenna port A" to transmit information on a first carrier in a first band (i.e. a third carrier is switched to a first carrier);
using a Tx channel of "one antenna port B" to transmit information on a second carrier in a second band (i.e. a fourth carrier is switched to a second carrier);

Method 2:

using a Tx channel of "one antenna port A" to transmit information on a second carrier in a second band (i.e. a third carrier is switched to a second carrier);
using a Tx channel of "one antenna port B" to transmit information on a first carrier in a first band (i.e. a fourth carrier is switched to a first carrier).

For the foregoing method 1 and method 2, the first carrier, the second carrier, the third carrier, and the fourth carrier are all involved in the switching, and therefore, during carrier switching, the terminal does not transmit any information on the carrier involved in the switching.

For the above embodiments of the present disclosure, to transmit data on a carrier included in the second carrier set after carrier switching, the terminal may have a plurality of carrier switching methods, and when switching is performed, it is also necessary to determine which carrier switching method to use specifically.

Optionally, the determining a carrier involved in switching includes:

determining a carrier switching relationship between a carrier in the first carrier set and a carrier in the second carrier set; and determining the carrier involved in switching according to the carrier switching relationship.

In this embodiment, when the terminal further determines the carrier in the first carrier set and the carrier switching in the second carrier set, the terminal specifically participates in the switching carrier. Optionally, the carrier switching relationship includes at least one of the following information:

(1) A correspondence between transmission channels used when different carriers transmit data. That is, the terminal determines the source of the transmission channel used when each carrier in the second carrier set transmits the data. For example, if the terminal is about to switch to the carrier 3 and the carrier 4 to transmit data, the terminal needs to respectively determine the source of the transmission channels used when data is transmitted on the carrier 3 and the carrier 4, that is, it is determined which carrier before the switching is used when data is transmitted on the carrier 3 and the carrier 4, so as to determine the carrier switching relationship. For example, it may be determined that the carrier 3 transmits data by using the transmission channel of the carrier 1 before the switching, and the carrier 4 transmits data by using the transmission channel of the carrier 2 before the switching, so that the carrier switching relationship is: the carrier 1 is switched to the carrier 3, and the carrier 2 is switched to the carrier 4

(2) a determined carrier switching pair, where the carrier switching pair includes two carriers for performing switching. That is, the correspondence between the carriers needed to be switched in the first carrier set and the second carrier set.

The terminal may directly determine the correspondence between the carrier needing to transmit data and the carrier before the switching, i.e., determine the carrier switching pair. For example, the carrier 1 and the carrier 3 are a group of carrier switching pairs, the carrier 2 and the carrier 4 are a group of carrier switching pairs, and the carrier switching relationship is: the carrier 1 is switched to the carrier 3, and the carrier 2 is switched to the carrier 4;

(3) Switching order among different carrier switching pairs. That is, when switching is between a carrier in the first carrier set and a carrier in the second carrier set, a switching sequence of carriers that need to be switched is required.

The terminal may also determine the switching sequence of the plurality of to-be-switched carrier. For example, if two carrier switching pairs are included, the carrier 1 and the carrier 3, the carrier 2, and the carrier 4, that is, the carrier 1 is switched to the carrier 3, and the carrier 2 is switched to the carrier 4, it may be determined that the switching between the carrier 1 and the carrier 3 is preferentially performed.

Optionally, the carrier switching relationship is determined in at least one of the following manners:

Method 1: based on preset carrier switching pair information.

Optionally, the carrier switching pair information includes: carrier information before switching; carrier information after the switching; carrier switching information involved in switching.

In this embodiment, the carrier switching relationship may be determined according to predetermined carrier switching pair information specified by radio resource control (RRC) signaling or the higher layer signaling or the protocol, that is, the transmission channel source of the carrier being about to transmit data is determined. When the carrier before the switching paired with the carrier to be switched is determined according to the carrier switching pair information, the transmission channel used by the carrier to be switched can be determined. For example, the preset carrier switching pair includes a carrier 1, a carrier 3, a carrier 2, and a carrier 4, and when the carrier is switched, data is transmitted on the carrier 3 by using the transmission channel of the carrier 1, and data is transmitted on the carrier 4 by using the transmission channel of the carrier 2.

Method 2: based on a minimum signal loss rule.

Optionally, the determining the carrier switching relationship based on a minimum signal loss rule includes:

determining a carrier switching group according to at least one carrier for transmitting data before switching and at least one carrier for transmitting data after switching, wherein the carrier switching group includes one carrier before switching and one carrier after switching; determining a signal interruption duration when each carrier switching group performs carrier switching; and determining a carrier switching group involved in switching according to a rule of the signal interruption duration being shortest.

In this embodiment, when the carrier switching relationship is determined, all carrier switching groups of carriers involved in switching are obtained when the carriers in the first carrier set are switched to carriers in the second carrier set; the signal interruption duration during carrier switching in each carrier switching group is determined; and the carrier switching relationship is determined according to the carrier switching group with the shortest signal interruption duration.

In this embodiment, when carrier switching of three or more bands is performed, the carrier switching method and the switching sequence are determined according to a principle that the loss of the transmitted signal is minimum. Since signal interruption may occur in the carrier switching process, the switching relationship with the shortest signal interruption duration in a plurality of carrier switching relationships may be determined as the final switching method.

Method 3: based on a scheduling signaling of downlink control information (DCI).

Optionally, the scheduling signaling of the DCI carries a switching indication, where the switching indication includes:

(1) a switched-to carrier involved in switching and a switched-from carrier used before switching, where a transmission channel corresponding to the switched-from carrier is converted into a transmission channel corresponding to the switched-to carrier after switching. That is, in the scheduling signaling of the DCI, both the switched-from carrier and the switched-to carrier are indicated;
or
(2) a switched-from carrier used before switching, where a transmission channel corresponding to the switched-from carrier is converted into a transmission channel corresponding to a switched-to carrier after switching. That is, in the DCI scheduling signaling, only the switched-from carrier is indicated, the switched-to carrier is implicitly indicated, or indicated by default.

In this embodiment, the network side device may transmit DCI scheduling signaling to the terminal to indicate the carriers before and after the switching; or only indicate the carrier before the switching, to determine the correspondence between the carrier after the switching and the carrier before the switching in an implicit or default manner.

The following separately describes the foregoing three methods for determining the carrier switching relationship by using a specific embodiment.

For method 1, the carrier switching relationship is determined based on preset carrier switching pair information.

The network side device configures the switching relationship of the carrier through signaling or semi-statically, or specifies the switching relationship of the carrier through a protocol.

The carrier switching relationship (that is, the carrier switching pair information) specified by the configuration information or the protocol at least includes: a carrier transmission situation before switching, a carrier transmission situation after switching, and carrier information involved in switching. Taking 3 bands and 3 carriers as an example, the carrier switching pair information of the 3 bands and 3 carriers is shown in Table 7.

TABLE 7. Carrier switching pair information of 3 bands and 3 carriers

| Index | Before carrier switching | After carrier switching | Switching pairing | Notes |
|---|---|---|---|---|
| 1 | C1+C2 | C1+C2 | NA | Non-carrier-switching scene |
|  |  | C1+C3 | {C2, C3} {C1, C1} | Switching between c2 and C3 C1 being not switched |
|  |  | C2+C3 | {C1, C3} {C2, C2} | Switching between c1 and C3 C2 being not switched |
| 2 | C1+C3 | C1+C2 | {C3, C2} {C1, C1} | Switching between c2 and C3 C1 being not switched |
|  |  | C1+C3 | NA | Non-carrier-switching scene |
|  |  | C2+C3 | {C1, C2} {C3, C3} | Switching between c1 and C2 C3 not being switched |
| 3 | C2+C3 | C1+C2 | {C3, C1} {C2, C2} | Switching between c1 and C3 C2 being not switched |
|  |  | C1+C3 | {C1, C2} {C3, C3} | Switching between c1 and C2 C3 being not switched |
|  |  | C2+C3 | NA | Non-carrier-switching scene |

In the above Table 7, the carrier switching situation in the case of 3-band is configured, and the pairing method for carrier switching under different scenario combinations is given. The above table content may also be expressed as the following content:

the current transmission state (before carrier switching) is transmission by using 1 port on the first carrier in the first band, and the state of "to-be-transmitted" (after the carrier switching) is transmission by using 1 port on the second carrier in the second band and transmission by using 1 port on the third carrier in the third band; the carrier switching occurs on the second carrier and the third carrier, that is, the second carrier and the third carrier are in a switching relationship, that is, in the carrier switching duration, the terminal does not want to transmit any data or signal on the second carrier and the third carrier.

It is assumed that the network side device schedules a switching scenario from A3 to A5 in Table 8 below.

TABLE 8: "Concurrent uplink" mode (3 carriers)

| Scene | Number of Tx channels (c1+c2+c3) | Number of antenna ports (c1+c2+c3) |
|---|---|---|
| Case 1 | 0T+1T+1T | A1={0P+0P+1P},A2={0P+1P+0P},A3={0P+1P+1P} |
| Case 2 | 1T+0T+1T | A1={0P+0P+1P},A4={1P+0P+0P},A5={1P+0P+1P} |

The meaning of switching A3 to A5 may be: in the scheduling signaling received by the terminal, the scheduling signaling 1 indicates that data is transmitted on the carrier 2 and the carrier 3 by using one port; and the scheduling signaling 2 indicates that the terminal is about to transmit data by using 1 port on the carrier 1 and the carrier 3. The latest ending time of the scheduled data indicated by the scheduling signaling 1 is earlier than the earliest start time of the scheduled data scheduled by the scheduling signaling. In this scenario, the carrier 3 is not switched, and the carrier 1 and the carrier 2 are switched.

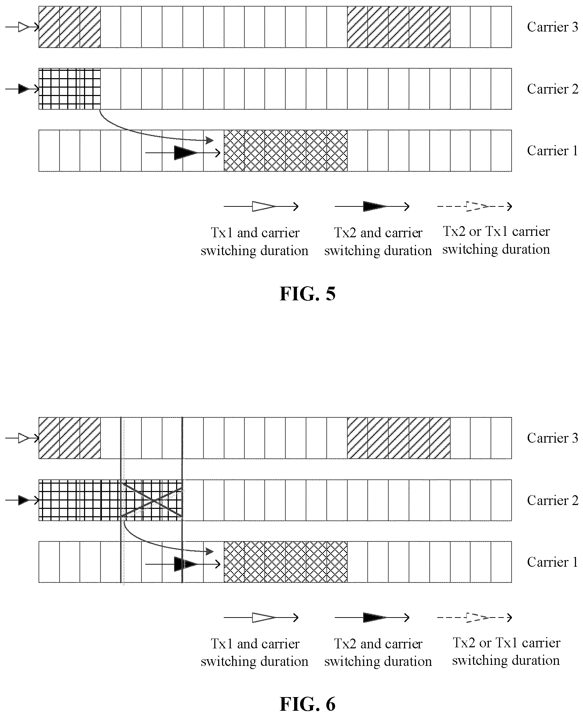

As shown in FIG. 5 and FIG. 6, the terminal performs the transmission of the carrier according to the carrier switching relationship (switching between c2 and c1) indicated by the network side device or determined by the protocol. In the scenario 1 shown in FIG. 5, the gap (GAP 0) between the carrier 2 and the carrier 1 is greater than or equal to the switching duration (switchtime), so that the problem of signal transmission interruption does not occur. For the second scenario shown in FIG. 6, the GAP 0 between the carrier 2 and the carrier 1 is less than the switching duration switchtime, so that a problem of signal transmission interruption may occur. Therefore, when the terminal performs carrier switching according to the predetermined carrier switching information, the phenomenon of the signal interruption may occur.

Taking 4 bands and 4 carriers as an example, the carrier switching pair information of the 4 bands and 4 carriers is shown in Table 9.

TABLE 9. Carrier switching pair information for 4 bands and 4 carriers

| Index | Before carrier switching | After carrier switching | Switching pairing | Explanation | Note |
|---|---|---|---|---|---|
| 1 | C1+C2 | C1+C2 | NA | Non-carrier-switching scene | Same as that of 3 carriers |
| | | C1+C3 | {C2,C3} {C1,C1} | Switching between c2 and C3 C1 being not switched | Same as that of 3 carriers |
| | | C2+C3 | {C1,C3} {C2,C2} | Switching between c1 and C3 C2 being not switched | Same as that of 3 carriers |
| | | C1+C4 | {C2,C4} {C1,C1} | Switching between c2 and C4 C1 being not switched | Same as that of 3 carriers |
| | | C2+C4 | {C1,C4} {C2,C2} | Switching between c1 and C4 C2 being not switched | Same as that of 3 carriers |
| | | C3+C4 | {C1,C3} {C2,C4} | Switching between c1 and C3 Switching between c2 and C4 | 4-carrier scene |

(continued)

| Index | Before carrier switching | After carrier switching | Switching pairing | Explanation | Note |
|-------|-------------------------|------------------------|-------------------|-------------|------|
| 2 | C1+C3 | C2+C4 | {C1,C2} {C3,C4} | Switching between c1 and C2 Switching between c3 and C4 | Other scene being same as that of 3 carriers |
| 3 | C1+C4 | C2+C3 | {C1,C2} {C3,C4} | Switching between c1 and C2 Switching between c3 and C4 | Other scene being same as that of 3 carriers |
| 4 | C2+C3 | C1+C4 | {C1,C2} {C3,C4} | Switching between c1 and C2 Switching between c3 and C4 | Other scene being same as that of 3 carriers |
| 5 | C2+C4 | C1+C3 | {C1,C2} {C3,C4} | Switching between c1 and C2 Switching between c3 and C4 | Other scene being same as that of 3 carriers |
| 6 | C3+C4 | C1+C2 | {C1,C3} {C2,C4} | Switching between c1 and C4 Switching between c2 and C4 | Other scene being same as that of 3 carriers |

In the foregoing Table 9, a carrier switching situation in a 4-band case is configured, and a pairing method for carrier switching under different scenario combinations is provided. The content of Table 9 may also be expressed as the following content:

the current transmission state (before carrier switching) is transmission on two carriers of two different bands using one port; and the state of "to-be-transmitted" (after carrier switching) is transmission on two carriers of another two different bands by using one port.

If carrier-1 and carrier-2, or carrier-3 and carrier-4 are used before carrier switching, the carrier switching relationship is switching between carrier-1 and carrier-3, and switching between carrier-2 and carrier-4 (i.e., carrier-1 and carrier-3 cannot transmit any data or signal in the carrier switching duration, carrier-2 and carrier-4 cannot transmit any data or signal in the carrier switching duration).

Otherwise, the carrier switching relationship is carrier-1 and carrier-2, and carrier-3 and carrier-4, that is, carrier-1 and carrier-2 cannot transmit any data or signal in the carrier switching duration; carrier-3 and carrier-4 cannot transmit any data or signals in the carrier switching duration.

For method 2, the carrier switching relationship is determined based on a rule of minimum signal loss.

In the method 2, the terminal may traverse various possible carrier switching combinations according to the scheduling information, and determine the carrier involved in the carrier switching with the aim of making the signal interruption amount minimum.

It is assumed that the carriers before switching are: the first carrier (the transmission end time is End1) and the second carrier (the transmission end time is End2);

Assuming that the carrier after the switching is: the carrier ready to transmit data is the third carrier (the transmission start time is Start3) and the fourth carrier (the transmission start time is Start4);

At least one of the third carrier and the fourth carrier is different from the first carrier or the second carrier; for example, the scenario is: the transmission carrier before switching is carrier-1 and carrier-2, and the transmission carrier after the switching is carrier-3 and carrier-4 }; or, for example, the scenario is: {the transmission carrier before switching is carrier-1 and carrier-2, and the transmission carrier after the switching is carrier-1 and carrier -3 };

The End 1 and the End 2 may be the same or different; and the Start 3 and the Start 4 may be the same or may be different.

The determining, by the terminal, the carrier switching relationship according to the rule that the signal loss is minimum specifically includes:

Step 1: the terminal calculates a signal interruption duration of each carrier switching group (for example, T1, T2,......, TN).

For example, the carrier switching group 1: the sum of the signal interruption durations of switching between the carrier 1 and the carrier 3 and switching between the carrier 2 and the carrier 4 is:

$$T1 = max(Switchingtime-(Start3-End1),0)+max(Switchingtime- (Start4-End2),0);$$

T1 indicates the sum of signal interruption durations when carrier 1 and carrier 3 are switched and when carrier 2 and carrier 4 are switched; max () represents the maximum value.
For example, carrier switching group 2: the sum of signal interruption durations of switching between the carrier 1 and the carrier 4 and switching between carrier 2 and carrier 3 is:

$$T2 = max(Switchingtime-(Start4-End1),0)+max(Switchingtime- (Start3-End2),0);$$

T2 represents the sum of signal interruption durations of switching between carrier 1 and carrier 4 and switching between carrier 2 and carrier 3; max () represents the maximum value.
Step 2: taking a carrier switching group with the shortest signal interruption duration in all carrier switching groups to perform carrier switching;
For example, if T1 < T2 in step 1, switching is between carrier 1 and carrier 3, and switching is between carrier 2 and carrier 4;
otherwise, switching is between the carrier 1 and the carrier 4, and switching is between the carrier 2 and the carrier 3.
It is assumed that the network side device schedules switching of A3 to A5 in Table 10 below.

TABLE 10: Concurrent uplink mode (4 carriers)

| Scene | Number of Tx channels (c1+c2+c3+c4 ) | Number of antenna ports (c1+c2+c3+c4) |
|---|---|---|
| Case 1 | 0T+0T+1T+1T | A1={0P+0P+0P+1P},A2={0P+0P+1P+0P}, A3={0P+0P+1P+1P} |
| Case 2 | 0T+1T+0T+1T | A1={0P+0P+0P+1P},A4={0P+1P+0P+0P}, A5={0P+1P+0P+1P} |

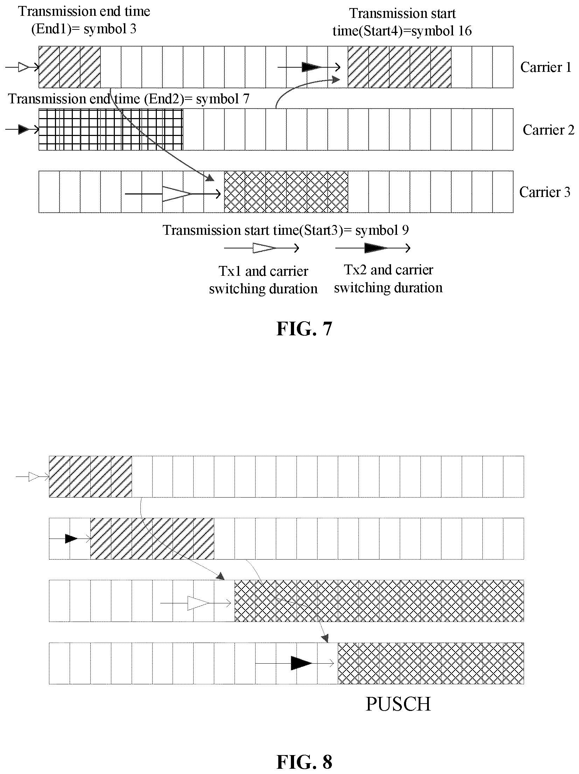

The switching of A3 to A5 in Table 10 may be: in the scheduling signaling received by the terminal, the scheduling signaling 1 indicates that data is transmitted on the carrier 3 and the carrier 4 by using one port; and the scheduling signaling 2 indicates that the terminal is about to perform data transmission on the carrier 2 and the carrier 4 by using one port. The latest end time of the scheduled data indicated by the scheduling signaling 1 is earlier than the earliest start time of the scheduled data indicated by the scheduling signaling 2, as shown in FIG. 7.
Before carrier switching, carrier 1 is a first carrier; carrier 2 is a second carrier; after switching, carrier 1 is a fourth carrier, and carrier 3 is a third carrier; assuming a carrier switching duration SwitchingTime = 5 symbols;
As shown in FIG. 7, the following information may be determined according to the minimum signal loss method:

T1 =max(Switchingtime-(Start3-End1),0)+max(Switchingtime- (Start4-End2),0) =max(5-(9-3),0)+max(5-(16-7),0) =max(-1,0)+max(-4,0)=0 T2 = max(Switchingtime-(Start4-End 1), O)+max(Switchingtime- (Start3-End2),0) =max(0,16-3)+max(5-(9-7),0) =max(-8,0)+max(3,0)=3

It can be seen from the above calculation that T1= 0: if the switching from carrier 1 to carrier 3 is performed and the switching of carrier 2 to carrier 4 is performed, the signal interruption duration is 0, that is, no signal interruption occurs;

T2 = 3: if the switching from carrier 2 to carrier 3 is performed, and the switching of carrier 1 to carrier 4 is performed, the signal interruption duration is 3;
then, the switching from carrier 1 to carrier 3 is selected under the criterion of minimum signal interruption loss, and switching of carrier 2 to carrier 4 is performed.

It should be noted that, for the condition of switching the same carrier, for example, switching carrier 1 to carrier 1, the carrier switching time duration is not actually required, that is, the corresponding SwitchingTime = 0;
"The transmission start time after the switching" subtracts "the end time of current transmission", which is equivalent to the interval between two transmission signals.
For the third method, the carrier switching relationship is determined according to the scheduling signaling of the downlink control information DCI.

In this embodiment, the terminal, according to the scheduling signaling of the DCI, indicates the correspondence between carrier switching, that is, the Tx channel used by the carrier performing "to-be-transmitted" transmission is determined through the scheduling signaling indication, to be the Tx channel of which carrier. The following uses an example in which the terminal supports simultaneous transmission of two channels on two carriers as an example for description.

The DCI indication method 1: in the scheduling signaling of the DCI, both the switched-from carrier and the switched-to carrier are indicated. For related DCI indication information, refer to Table 11 below.

TABLE 11: DCI indicates a carrier switching relationship

| DCI bit field (New) | Bit length | Note |
|---|---|---|
| Source_carrier_indictor | 1 | 0: represents a first carrier occupying a Tx channel before the carrier switching; or vice versa<br>1: represents a second carrier occupying a Tx channel before the carrier switching; or vice versa |
| Density_carrier_indictor | 1 | 0: represents a first carrier scheduled by the DCI; or vice versa<br>1: represents a second carrier scheduled by the DCI; or vice versa |

It should be noted that when the terminal supports at most two Tx transmission channels to transmit data at the same time, the two Tx transmission channels simultaneously serve two carriers at most, that is, at a certain time instant, the carriers in at most two bands occupy the transmission channels to transmit signals and data, and therefore, the two Tx transmission channels can be indicated by 1 bit.

When the terminal supports at most two Tx transmission channels to transmit data at the same time, when one DCI is used for scheduling, only carrier data of the at most two bands can be scheduled and transmitted in parallel, and therefore, the 1-bit indication can also be used to continue the indication.

Further, if one DCI schedules carriers of greater than two bands, the Density_carrier_indicator is used to indicate data on carriers in first two bands in the time domain.

Correspondingly, the foregoing indication completes the process of determining the switching relationship of one pair of carriers, and the Tx channel of the carrier after the switching is derived from the carrier channel of the carrier before switching; that is, the network side device indicates a relationship of one carrier switching pair, and implicitly indicates the relationship of another carrier switching pair.

The carrier switching process indicated by the DCI indication method 1 is shown in FIG. 8, where in the scheduling signaling, a Physical Uplink Shared Channel (PUSCH) -3 is scheduled on c3, and PUSCH -4 is scheduled on c4.

In FIG. 8, the DCI scheduling signaling 1 includes the following information:

PUSCH -3 is scheduled on C3, and PUSCH -4 is scheduled on C4;
Source_carrier_indicator = 0, that is, a first carrier occupying a Tx channel before carrier switching, that is, c1;
Density_carrier_indicator = 0, that is, the first carrier after carrier switching scheduled by the DCI, that is, c3;
c1 is switched to c3 (DCI explicit indication); c2 is switched to C4 (DCI implicit indication, and the terminal can obtain the implicit indication through calculation).

In this case, in combination with scheduling information (or higher layer signaling configuration information) before the DCI scheduling signaling 1, following may be obtained:
Source_carrier_indicator = 0 refers to a first carrier occupying a Tx channel before carrier switching, that is, in FIG. 8, the terminal may determine: a Tx channel for PUSCH-3 data transmission on c3 is from c1, and a carrier switching relationship established between c1 and c3;

After the carrier switching relationship between c3 and c1 is determined, it may be determined that c4 and c2 correspond to each other and form the switching carrier pair, that is, the Tx channel for PUSCH-4 data transmission on c4 is from c2, and the carrier switching relationship is established between c2 and c4.

DCI indication method 2: in DCI scheduling signaling, only the switched-from carrier is indicated, the switched-to carrier is implicitly indicated or indicated by default indication.

The DCI indication information in the DCI indication method 2 is specifically shown in Table 12 below.

TABLE 12: DCI indicates a carrier switching relationship

| DCI bit field | Bit length | Note |
|---|---|---|
| Source_carrier_indictor | 1 | 0: represents a first carrier occupying a Tx channel before carrier switching; 1 : represents a second carrier occupying a Tx channel before carrier switching; |
| Density_carrier_indictor | 0 | Not indicated in the DCI; by default, the first carrier or the second carrier scheduled by the DCI (may be specified in a protocol or configured by RRC) |

In the above table 12, when the terminal supports at most two Tx transmission channels to simultaneously transmit data, the two Tx transmissions simultaneously serve the two carriers at the same time, that is, the carriers of at most two bands occupy the transmission channels to transmit signals and data at a certain time instant, so that the two Tx transmissions can be indicated by 1 bit.

When the terminal supports at most two Tx transmission channels and simultaneously transmits, then:

when one DCI schedules data on a carrier on one band, the switched-to carrier is indicated as a carrier of a default scheduling band;

when one DCI schedules data on two bands, one of the carriers (for example, the first carrier or the second carrier) may also be default.

Correspondingly, the foregoing indication completes the process of determining the switching relationship of one pair of carriers, and the Tx channel of the carrier after the switching is from another carrier channel before switching.

In this embodiment, the relationship between the carrier switching pair may be flexibly indicated by adjusting the Source_carrier_indicator.

The present disclosure solves the problem of determining which scenarios require the carrier switching time duration and determining a carrier switching relationship (i.e., Tx channel units of a carrier after the switching is from which carrier before the switching) when switching between carriers in excess of 2 bands is performed, so that the 3-band or 4-band carrier switching can be effectively performed.

In the embodiments of the present disclosure, the carrier that needs to be involved in the switching is determined from the first carrier set used for transmitting data before the switching and the second carrier set used for transmitting data after the switching, so that the terminal does not transmit any data on the carrier involved in the switching within the carrier switching time duration, so as to ensure the effective implementation of the multi-band carrier switching, and can be applied to the carrier switching process in three bands and more bands.

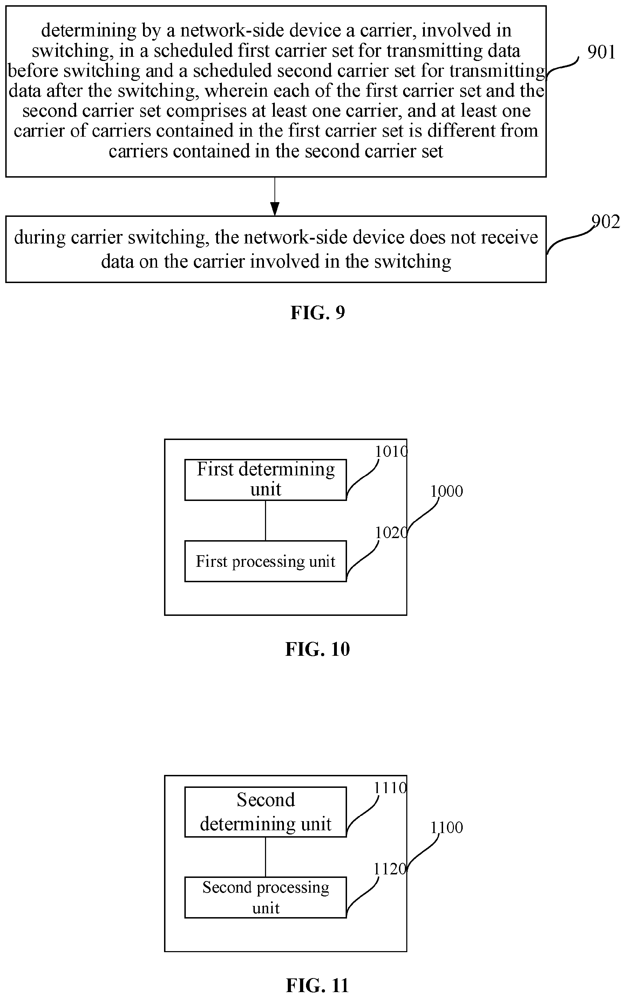

As shown in FIG. 9, an embodiment of the present disclosure further provides a carrier switching method applied to a network side device. The method includes following steps.

Step 901: a network side device determine a carrier, involved in switching, from a scheduled first carrier set for transmitting data before switching and a scheduled second carrier set for transmitting data after the switching, where the first carrier set and the second carrier set each include at least one carrier, and at least one carrier included in the first carrier set is different from a carrier included in the second carrier set..

In this embodiment, the first carrier set may be a carrier on which the terminal scheduled by the network side device by using scheduling signaling at a first time instant transmits data, and the second carrier set may be a carrier on which the terminal scheduled by the network side device by using scheduling signaling at a second time instant transmits data. For example, before the first time instant, the network side device has scheduled the terminal to transmit data on the carrier included in the first carrier set, and if the network side device schedules the terminal to transmit data on the carrier included in the second carrier after the first time instant, the terminal needs to switch from the carrier of the first carrier set to the carrier of the second carrier set, and transmit data, and when the carrier of the first carrier set is switched to the second carrier set, the carrier switching time duration is required.

The first carrier set may include one or more carriers, the second carrier set may include one or more carriers, some carriers may exist both in the first carrier set and in the second carrier set, for example, the first carrier set includes a carrier 2 and a carrier 3, and the second carrier set includes a carrier 1 and a carrier 2.

It should be noted that the first time instant may include a plurality of time instants, and the embodiments of the present disclosure are only used to indicate a time instant when a network side device schedules a terminal to transmit data.

Step 902: in a carrier switching time duration, the network side device does not receive data on the carrier involved in switching.

The carrier switching time duration is a duration in which the terminal switches from a carrier of the first carrier set to a carrier of a second carrier set. When carrier switching is performed, a transmission channel needs to be switched. Because at least one different carrier exists in the first carrier set and the second carrier set, the carrier switching time duration is required during carrier switching. Within the carrier switching time duration, on the carrier involved in the switching, the terminal does not transmit any data, and the network side device does not receive any data to save signaling overheads.

In the embodiments of the present disclosure, the carrier needing to be involved in the switching is determined from the first carrier set used for transmitting data before the switching and the second carrier set used for transmitting data after the switching, so that the network side device does not receive any data on the carrier involved in the switching within the carrier switching time duration, which can ensure the effective implementation of multi-band carrier switching, and can save signaling overheads.

Optionally, a quantity of different carriers included in the first carrier set and the second carrier set is greater than or equal to 3

In this embodiment, the number of bands corresponding to the carriers included in the first carrier set and the second carrier set is greater than 2, which can ensure that the carrier switching method in the embodiments of the present disclosure is applicable to a band carrier switching process in three bands and above.

Optionally, the determining the carrier, involved in the switching, from the scheduled first carrier set for transmitting data before switching and the second carrier set for transmitting data after the switching includes:

in a case that each carrier included in the first carrier set is configured for one-port transmission and each carrier included in the second carrier set is also configured for one-port transmission, determining one carrier from the first carrier set as a switched-from carrier involved in switching, and determining one carrier from the second carrier set as a switched-to carrier involved in switching;

considering the determined switched-from carrier and the determined switched-to carrier as the carrier involved in switching.

In this embodiment, when the terminal transmits data on each carrier before the switching and after the switching by using one antenna port, that is, the terminal occupies one transmission channel on each carrier to transmit data, and the network side device determines the correspondence of the carrier switching according to carriers included in the first carrier set and carriers included in the second carrier set, that is, determines which carrier in the first carrier set is switched to which carrier in the second carrier set, and the carrier before switching and the carrier after the switching are carriers involved in switching.

Optionally, the determining the carrier involved in the switching according to the scheduled first carrier set for transmitting data before switching and the scheduled second carrier set for transmitting data includes:

in a case that the second carrier set includes a first carrier of a first band, the first carrier set includes a second carrier of a second band and a third carrier of a third band, and each of the first carrier, the second carrier, and the third carrier is configured for one-port transmission, the determined carriers involved in switching include: the second carrier used as a switched-from carrier, and the first carrier used as the switched-to carrier; or, the third carrier used as a switched-from carrier, and the first carrier used as a switched-to carrier.

In this embodiment, if the second carrier set includes the first carrier of the first band, the first carrier set includes the second carrier of the second band and the third carrier of the third band, and the network side or the higher layer signaling configures that each carrier occupies one antenna port, that is, each carrier occupies one transmission channel to transmit data, it may be determined that the terminal needs to switch from the carrier set (carrier 2, carrier 3) to the carrier set (carrier 1), and when carrier switching is performed, carrier 2 may be switched to carrier 1, or carrier 3 is switched to carrier 1.

when the network side device or the higher layer signaling performs data scheduling, a time instant at which the terminal transmits data on each carrier may be indicated. For example, if the network side device determines that the terminal is about to transmit data on the first carrier of the first band at the first time instant through one antenna port; and before the first time instant, the terminal transmits data on a second carrier of the second band through one port, and transmits data on a third carrier of the third band through one port; then it is determined that a carrier, involved in switching, of the terminal includes: the second carrier used as a switched-from carrier, and the first carrier used as the switched-to carrier; or the third carrier used as a switched-from carrier, and the first carrier used as a switched-to carri er.

In this embodiment, if the network side device determines that the terminal is about to transmit data through one port on the first carrier of the first band at the first time instant, and it is determined that the terminal currently transmits data on the second carrier of the second band through one port, and data is currently transmitted on the third carrier of the third band through one port, it may be determined that the terminal needs to switch from the second carrier of the second band and the third carrier of the third band to the first carrier of the first band at the first time instant and transmit data. Specifically, the second carrier may be switched to the first carrier to transmit data on the first carrier, or may be switched from the third carrier to the first carrier to transmit data on the first carrier.

In a carrier switching process, the terminal does not transmit data on a carrier involved in switching, and the network side device does not receive data on a carrier involved in switching, for example, if the second carrier is switched to the first carrier, then the terminal does not transmit data on the first carrier and the second carrier in the switching process, and the network side device does not receive data on the first carrier and the second carrier; and if the third carrier is switched to the first carrier, then the terminal does not transmit data on the first carrier and the third carrier during the switching process, and the network side device does not receive data on the first carrier and the third carrier. For specific examples, reference may be made to the embodiments of the carrier switching method applied to the terminal, and details are not described herein again.

Optionally, the determining the carrier, involved in the switching, from the scheduled first carrier set used for transmitting data before switching and the second carrier set used for transmitting data after the switching includes:
in a case that the second carrier set includes a second carrier of a second band and a third carrier of a third band and the first carrier set includes a first carrier of a first band, and each of the second carrier, the third carrier, and the first carrier is configured for one-port transmission, determining that the carrier involved in switching includes: the first carrier used as a switched-from carrier and the second carrier used as the switched-to carrier; or, the first carrier used as a switched-from carrier, and the third carrier used as a switched-to carrier.

In this embodiment, if the second carrier set includes the second carrier of the second band and the third carrier of the third band and the first carrier set includes the first carrier in the first band, and the network side or the higher layer signaling configures that each carrier occupies one antenna port, that is, each carrier occupies one transmission channel to transmit data, it may be determined that the terminal needs to switch from the carrier set (carrier 1) to the carrier set (carrier 2, carrier 3), and when carrier switching is performed, carrier 1 may be switched to carrier 2, or carrier 1 is switched to carrier 3.

When performing data scheduling, the network side device may indicate a time instant when the terminal transmits data on each carrier. For example, if the network side device determines that the terminal is about to transmit data on the second carrier of the second band at the first time instant through one antenna port and transmit data on the third carrier of the third band through one antenna port; before the first time instant, the terminal transmits data on a first carrier of a first band through one port; and it is determined that a carrier, involved in switching, of the terminal includes: the first carrier being switched to the second carrier; or the first carrier being switched to the third carrier.

In this embodiment, if the network side device determines that data is to be transmitted on the second carrier of the second band at the first time instant through one port, and data is to be transmitted on the third carrier of the third band through one port, and the network side device determines that the terminal currently has transmitted data on the first carrier of the first band through one port, it can be determined that the terminal needs to switch at the first time instant to the second carrier of the second band and the third carrier of the third band to transmit data. Specifically, the first carrier may be switched to the second carrier to transmit data on the second carrier, or may be switched from the first carrier to the third carrier to transmit data on the third carrier.

In the carrier switching process, the terminal does not transmit data on the carrier involved in the switching, and the network side device does not receive data on the carrier involved in the switching.

Optionally, the determining the carrier, involved in the switching, in the scheduled first carrier set for transmitting data before switching and the second carrier set for transmitting data includes:

in a case that the second carrier set includes a first carrier of a first band and a second carrier of a second band, the first carrier set includes a first carrier of a first band and a third carrier of a third band, and each of the first carrier, the second carrier, and the third carrier is configured to occupy one-port, determining that the carrier involved in the switching includes:
the third carrier used as a switched-from carrier and the second carrier used as the switched-to carrier;
or, a first carrier in the first carrier set used as first switched-from carriers, the second carrier used as a first switched-to carrier, and the third carrier used as a second switched-from carrier and a first carrier in the second carrier set used as second switched-to carriers.

In this embodiment, if the second carrier set includes the first carrier in the first band and the second carrier in the second band, the first carrier set includes the first carrier in the first band and the third carrier in the third band, and the network side or the higher layer signaling configures that each carrier occupies one antenna port, that is, each carrier occupies one transmission channel to transmit data, it may be determined that the terminal needs to switch from the carrier set (carrier 1, carrier 3) to the carrier set (carrier 1, carrier 2), and during the carrier switching, the carrier 3 may be switched to the carrier 2, and the carrier 1 is not switched; or, the carrier 1 is switched to the carrier 2, and the carrier 3 is switched to the carrier 1.

When performing data scheduling, the network side device may indicate a time instant when the terminal transmits data on each carrier. For example, if the network side device determines that the terminal is about to transmit data on the first carrier of the first band at the first time instant through one antenna port, and the terminal is about to transmit data on the second carrier of the second band through one antenna port; before the first time instant, the terminal transmits data on a first carrier of a first band through one port, and transmits data on a third carrier of a third band through one antenna port; then it is determined that a carrier involved in switching of the terminal includes: the second carrier is switched to the third carrier; or, the first carrier before switching is switched to the second carrier, and the third carrier before switching is switched to the second carrier.

In this embodiment, in the carriers before and after the switching, some carriers are the same, for example, the first carrier set before the switching includes: carrier 1 and carrier 3, and the second carrier set after the switching includes carrier 1 and carrier 2: two switching cases may exist: (1): carrier 1 is not switched, and carrier 3 and carrier 2 are switched; (2): the carrier 1 before switching is switched to the carrier 2, the carrier 3 before switching is switched to the carrier 1. In the carrier switching process, the terminal does not transmit any information on the carrier involved in the switching, and the network side device does not receive the information on the carrier involved in the switching.

Optionally, the determining the carrier, involved in the switching, in the scheduled first carrier set for transmitting data before switching and the scheduled second carrier set for transmitting data after switching includes:

in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured to occupy one port, determining that the carrier involved in the switching includes: the third carrier used as a first switched-from carrier, the first carrier used as a first switched-to carrier, the fourth carrier used as a second switched-from carrier, and the second carrier used as a second switched-to carrier;

or, the third carrier used as the first switched-from carrier, the second carrier used as the first switched-to carrier, the fourth carrier used as the second switched-from carrier, and the first carrier used as the second switched-to carrier.

In this embodiment, if the second carrier set includes the first carrier of the first band and the second carrier of the second band, the first carrier set includes the third carrier of the third band and the fourth carrier of the fourth band, and the network side or the higher layer signaling configures that each carrier occupies one antenna port, that is, each carrier occupies one transmission channel to transmit data, it may be determined that the terminal needs to switch from the carrier set (carrier 3, carrier 4) to the carrier set (carrier 1, carrier 2), and when carrier switching is performed, carrier 3 may be switched to carrier 1, and carrier 4 is switched to carrier 2; or, the carrier 3 is switched to the carrier 2, and the carrier 4 is switched to the carrier 1.

When the network side performs data scheduling, a time instant at which the terminal transmits data on each carrier may be indicated. If the network side device determines that the terminal is about to transmit data through one antenna port on a first carrier of a first band at a first time instant, and transmit data on a second carrier of a second band through one antenna port; before the first time instant, the terminal transmits data on a third carrier of a third band through one port, and transmits data on a fourth carrier of a fourth band through one port; it is determined that a carrier involved in switching of the terminal includes: the third carrier is switched to the first carrier, and the fourth carrier is switched to a second carrier; or the third carrier is switched to the second carrier, and the fourth carrier is switched to the first carrier.

In this embodiment, when carrier switching is performed, four carriers in four bands are involved, and the carriers before switching and the switched carriers are different. During carrier switching, four carriers all involve in switching, and in the switching process, the terminal does not transmit any information on the 4 carriers. For specific examples, reference may be made to the method embodiments applied to the terminal, and details are not described herein again.

In the embodiments of the present disclosure, the terminal may have a plurality of carrier switching methods to transmit data on a carrier included in the second carrier set after carrier switching, and the network side device further needs to determine which carrier switching method is specifically used when the terminal performs carrier switching.

Optionally, the determining the carrier involved in switching includes: determining the carrier switching relationship between carriers in the first carrier set and carriers in a second carrier set; and determining the carrier involved in switching according to the carrier switching relationship.

Optionally, the carrier switching relationship includes at least one of the following information:

(1) determining the carrier switching relationship between carriers in the first carrier set and carriers in a second carrier set; that is, the network side device determines the source of the transmission channel used when the terminal transmits data in each carrier in the second carrier set.

For example, if the terminal is about to switch to the carrier 3 and the carrier 4 to transmit data, the terminal needs to respectively determine the sources of the transmission channels used when data is transmitted on the carrier 3 and the carrier 4, that is, the channels of the carriers used before the switching when data is transmitted on the carrier 3 and the carrier 4 are determined, so as to determine the carrier switching relationship. For example, it may be determined that the carrier 3 transmits data by using the transmission channel of the carrier 1 before the switching, and the carrier 4 transmits data by using the transmission channel of the carrier 2 before the switching, so that the carrier switching relationship is: the carrier 1 is switched to the carrier 3, and the carrier 2 is switched to the carrier 4.

(2) a determined carrier switching pair, where the carrier switching pair includes two carriers for performing switching. That is, the network side device determines the correspondence between carriers that need to be switched in the first carrier set and in the second carrier set;

the network side device may directly determine the correspondence between the carrier that is needed to transmit data by the terminal and the carrier before the switching, i.e., the carrier switching pair is determined. For example, when the carrier 1 and the carrier 3 constitute a carrier switching pair and the carrier 2 and the carrier 4 constitute a carrier switching pair, the carrier switching relationship is that the carrier 1 is switched to the carrier 3, and the carrier 2 is switched to the carrier 4.

(3) a switching order among different carrier switching pairs. That is, when the network side device determines the switching sequence of carriers that need to be switched, when switching between the carrier in the first carrier set and the carrier in the second carrier set.

The network side device may further determine the switching order among multiple to-be-switched carriers. For example, if two carrier switching pairs are included which are the carrier 1 and the carrier 3, the carrier 2 and the carrier 4, that is, the carrier 1 is switched to the carrier 3, and the carrier 2 is switched to the carrier 4, the switching between the carrier 1 and the carrier 3 is preferentially performed.

The present disclosure solves the problem of determining which scenarios require the carrier switching time duration and determining the carrier switching relationship (i.e. which carrier before switching is used for the Tx channel of the carrier after the switching) when switching between carriers in more than two bands, so that the carrier switching in 3 or more bands can be effectively performed.

In the embodiments of the present disclosure, the carrier that needs to be involved in the switching is determined from the first carrier set for transmitting data before the switching and the second carrier set for transmitting data after the switching, so that no data is received on the carrier involved in the switching within the carrier switching time duration, which can ensure the effective implementation of multi-band carrier switching, and can save signaling overheads.

The above embodiments describe the carrier switching method of the present disclosure, and the following embodiments will be further described with reference to the accompanying drawings.

As shown in FIG. 10, an embodiment of the present disclosure further provides a carrier switching apparatus 1000, applied to a terminal and including: a first determining unit 1010, configured to determine a carrier, involved in switching, from a first carrier set for transmitting data before switching and a second carrier set for transmitting data after the switching, where each of the first carrier set and the second carrier set includes at least one carrier, and at least one carrier included in the first carrier set is different from a carrier included in the second carrier set; a first processing unit 1020 configured to not transmit data on the carrier involved in the switching during the carrier switching time duration.

Optionally, the number of carriers that are different between the first carrier set and the second carrier set is greater than or equal to 3

Optionally, the first determining unit is specifically configured to:

in a case that each carrier included in the first carrier set is configured for one-port transmission and each carrier included in the second carrier set is also configured for one-port transmission respectively, determine one carrier from the first carrier set as a switched-from carrier involved in switching, and determine one carrier from the second carrier set as a switched-to carrier involved in switching;

take the determined switched-from carrier and the determined switched-to carrier as the carriers involved in switching.

Optionally, the first determining unit is specifically configured to:

in a case that the second carrier set includes a first carrier of a first band and the first carrier set includes a second carrier of a second band and a third carrier of a third band, and each of the first carrier, the second carrier, and the third carrier is configured for one-port transmission, determine that the carrier involved in switching includes: the second carrier used as a switched-from carrier and the first carrier used as the switched-to carrier; or, the third carrier used as a switched-from carrier, and the first carrier used as a switched-to carrier.

Optionally, the first determining unit is specifically configured to:

in a case that the second carrier set includes a second carrier of a second band and a third carrier of a third band and the first carrier set includes a first carrier of a first band, and each of the second carrier, the third carrier, and the first carrier is configured for one-port transmission, determine that the carrier involved in switching includes the first carrier used as a switched-from carrier and the second carrier used as the switched-to carrier; or, the first carrier used as a switched-from carrier, and the third carrier used as a switched-to carrier.

Optionally, the first determining unit is specifically configured to:

in a case that the second carrier set includes a first carrier of a first band and a second carrier of a second band, the first carrier set includes a first carrier of a first band and a third carrier of a third band; and in a case that each of the first carrier, the second carrier, and the third carrier is configured for one-port transmission, determine that the carrier involved in the switching includes the third carrier used as a switched-from carrier and the second carrier used as the switched-to carrier; or, a first carrier in the first carrier set used as a first switched-from carrier, the second carrier used as a first switched-to carrier, and the third carrier used as a second switched-from carrier and a first carrier in the second carrier set used as a second switched-to carrier.

Optionally, the first determining unit is specifically configured to:

in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured for one-port transmission, determine that the carrier involved in the switching includes: the third carrier used as a first switched-from carrier, the first carrier used as a first switched-to carrier, the fourth carrier used as a second switched-from carrier, and the second carrier used as a second switched-to carrier;

or, the third carrier used as the first switched-from carrier, the second carrier used as the first switched-to carrier, the fourth carrier used as the second switched-from carrier, and the first carrier used as the second switched-to carrier.

Optionally, the first determining unit is specifically configured to:
a first determining subunit configured to determine a carrier switching relationship between a carrier in the first carrier set and a carrier in the second carrier set; and a second determining subunit configured to determine the carrier involved in switching according to the carrier switching relationship.

Optionally, the carrier switching relationship includes at least one of the following information:

(1) correspondence between transmission channels used when different carriers transmit data;
(2) a determined carrier switching pair, where the carrier switching pair includes two carriers for performing switching;
(3) switching order among different carrier switching pairs.

Optionally, the carrier switching relationship is determined by at least one of the following methods:

(1) based on preset carrier switching pair information;
(2) based on a minimum signal loss rule;
(2) based on a scheduling signaling of downlink control information (DCI).

Optionally, the carrier switching pair information includes: carrier information before switching; carrier information after the switching; carrier switching information involved in switching.

Optionally, when the first determining subunit determines the carrier switching relationship based on the minimum signal loss rule, the first determining subunit is configured to:
determine a carrier switching group according to at least one carrier for transmitting data before switching and at least one carrier for transmitting data after switching, wherein the carrier switching group includes one carrier before switching and one carrier after switching; determine a signal interruption duration when each carrier switching group performs carrier switching; and determine a carrier switching group involved in switching according to a rule of the signal interruption duration being shortest.

Optionally, the scheduling signaling of the DCI carries a switching indication, where the switching indication includes:

(1) a switched-to carrier involved in switching and a switched-from carrier used before switching, where a transmission channel corresponding to the switched-from carrier is converted into a transmission channel corresponding to the switched-to carrier after switching;

or (2) a switched-from carrier used before switching, where a transmission channel corresponding to the switched-from carrier is converted into a transmission channel corresponding to a switched-to carrier after switching.

It should be noted here that the device provided in the embodiment of the present disclosure can realize all the method steps realized by the method embodiment applied to the terminal and can achieve the same technical effect, and the part that is the same as the method embodiment and the beneficial effect in the present embodiment are not specifically described herein.

As shown in FIG. 11, the embodiment of the present disclosure also provides a carrier switching device 1100 applied to a network-side device. The carrier switching device 1100 includes: a second determining unit 1110 configured to determine a carrier, involved in switching, from a scheduled first carrier set for transmitting data before switching and a scheduled second carrier set for transmitting data after the switching, where each of the first carrier set and the second carrier set includes at least one carrier, and at least one carrier included in the first carrier set is different from a carrier included in the second carrier set; a second processing unit 1120 configured to in a carrier switching time duration, not receive data on the carrier involved in switching.

Optionally, a quantity of carriers that are different between the first carrier set and the second carrier set is greater than or equal to 3.

Optionally, the second determining unit is specifically configured to: in a case that each carrier included in the first carrier set is configured for one-port transmission and each carrier included in the second carrier set is also configured for one-port transmission, determine one carrier from the first carrier set as a switched-from carrier involved in switching, and determine one carrier from the second carrier set as a switched-to carrier involved in switching; consider the determined switched-from carrier and the determined switched-to carrier as the carriers involved in switching.

Optionally, the second determining unit is specifically configured to: in a case that the second carrier set includes a first carrier of a first band, the first carrier set includes a second carrier of a second band and a third carrier of a third band, and each of the first carrier, the second carrier, and the third carrier is configured for one-port transmission, determine that the carriers involved in switching include: the second carrier used as a switched-from carrier, and the first carrier used as the switched-to carrier; or, the third carrier used as a switched-from carrier, and the first carrier used as a switched-to carrier.

Optionally, the second determining unit is specifically configured to: in a case that the second carrier set includes a second carrier of a second band and a third carrier of a third band and the first carrier set includes a first carrier of a first band, and each of the second carrier, the third carrier, and the first carrier is configured for one-port transmission, determine that the carriers involved in switching include: the first carrier used as a switched-from carrier and the second carrier used as the switched-to carrier; or, the first carrier used as a switched-from carrier, and the third carrier used as a switched-to carrier.

Optionally, the second determining unit is specifically configured to: in a case that the second carrier set includes a first carrier of a first band and a second carrier of a second band, the first carrier set includes a first carrier of a first band and a third carrier of a third band, and each of the first carrier, the second carrier, and the third carrier is configured to occupy one-port, determine that the carriers involved in the switching include: the third carrier used as a switched-from carrier and the second carrier used as the switched-to carrier; or, a first carrier in the first carrier set used as first switched-from carriers, the second carrier used as a first switched-to carrier, and the third carrier used as a second switched-from carrier and a first carrier in the second carrier set used as a second switched-to carrier.

Optionally, the second determining unit is specifically configured to: in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured to occupy one port, determine that the carriers involved in the switching include: the third carrier used as a first switched-from carrier, the first carrier used as a first switched-to carrier, the fourth carrier used as a second switched-from carrier, and the second carrier used as a second switched-to carrier; or, the third carrier used as the first switched-from carrier, the second carrier used as the first switched-to carrier, the fourth carrier used as the second switched-from carrier, and the first carrier used as the second switched-to carri er

Optionally, the second determining unit includes: a third determining subunit configured to determine the carrier switching relationship between carriers in the first carrier set and carriers in a second carrier set; a fourth determining subunit configured to determine the carrier involved in switching according to the carrier switching relationship.

Optionally, the carrier switching relationship includes at least one of the following information:

(1) correspondence between transmission channels used when different carriers transmit data;
(2) a determined carrier switching pair, where the carrier switching pair includes two carriers for performing switching;
(3) switching order among different carrier switching pairs.

It should be noted here that the above-mentioned device provided in the embodiment of the present disclosure can realize all the method steps realized by the method embodiment applied to the network-side device and can achieve the same technical effect, and the part and beneficial effect that are the same as the method embodiment in the present embodiment are not specifically described herein.

It should be noted that the division of the unit in the embodiment of the present disclosure is schematic, and is only a logical function division, and there may be another division mode when it is actually realized. In addition, each functional unit in each embodiment of the present disclosure may be integrated in a processing unit, or each unit may exist separately physically, or two or more units may be integrated in a single unit. The above-mentioned integrated units can be implemented either in the form of hardware or in the form of software function units.

When the integrated unit is realized in the form of a software function unit and is marketed or used as an independent product, it can be stored in a processor-readable storage medium. Based on this understanding, the technical solution of the present disclosure is in essence or contributes to the relevant technology, or all or part of the technical solution, may be embodied in the form of a software product, which is stored in a storage medium and includes instructions to enable a computer device (which may be a personal computer, server, or network equipment, etc.) or a processor (processor) to perform all or part of the steps of the method described in each embodiment of the present disclosure. The storage medium includes: a USB flash memory, a mobile hard disk, a Read-Only Memory (ROM), a Random Access Memory (RAM), a magnetic disk or an optical disk and other media that can store program codes.

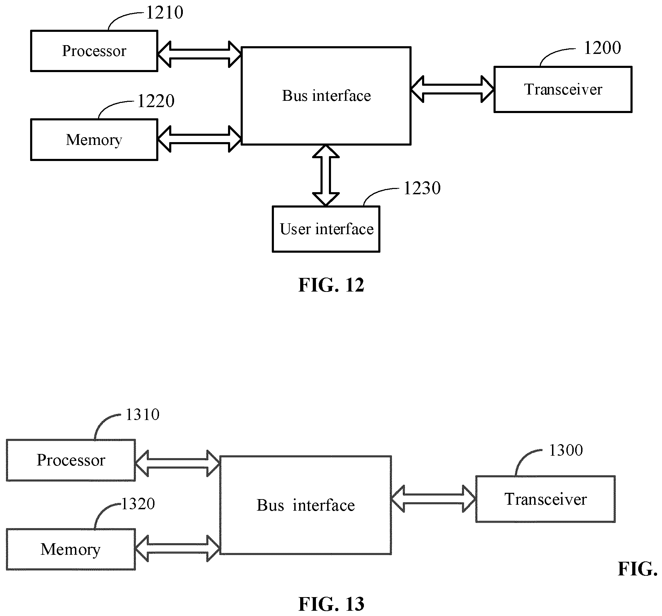

As shown in FIG. 12, the embodiments of the present disclosure further provides a terminal, including: a memory 1220, a transceiver 1200, a processor 1210; wherein the memory 1220 is configured for storing computer programs; the transceiver 1200 is configured for transmitting and receiving data under the control of the processor 1210; the processor 1210 is configured for reading a computer program in the memory and performing the following operations:

determining one or more carriers, involved in switching, from a first carrier set for transmitting data before switching and a second carrier set for transmitting data after the switching, where each of the first carrier set and the second carrier set includes at least one carrier, and at least one carrier included in the first carrier set is different from a carrier included in the second carrier set; not transmitting data on the carrier involved in the switching during the carrier switching time duration.

Optionally, the number of carriers that are different between the first carrier set and the second carrier set is greater than or equal to 3.

Optionally, the processor is configured to read a computer program in the memory and perform the following operations:

in a case that each carrier included in the first carrier set is configured for one-port transmission and each carrier included in the second carrier set is also configured for one-port transmission, determining one carrier from the first carrier set as a switched-from carrier involved in switching, and determining one carrier from the second carrier set as a switched-to carrier involved in switching; considering the determined switched-from carrier and the determined switched-to carrier as the carriers involved in switching.

Optionally, the processor is configured to read a computer program in the memory and perform the following operations:

in a case that the second carrier set includes a first carrier of a first band and the first carrier set includes a second carrier of a second band and a third carrier of a third band, and each of the first carrier, the second carrier, and the third carrier is configured for one-port transmission, determining that the carrier involved in switching includes: the second carrier used as a switched-from carrier and the first carrier used as the switched-to carrier; or, the third carrier used as a switched-from carrier, and the first carrier used as a switched-to carrier.

Optionally, the processor is configured to read a computer program in the memory and perform the following operations:

in a case that the second carrier set includes a second carrier of a second band and a third carrier of a third band and the first carrier set includes a first carrier of a first band, and each of the second carrier, the third carrier, and the first carrier is configured for one-port transmission, determining that the carrier involved in switching includes the first carrier used as a switched-from carrier and the second carrier used as the switched-to carrier; or, the first carrier used as a switched-from carrier, and the third carrier used as a switched-to carrier.

Optionally, the processor is configured to read a computer program in the memory and perform the following operations:

in a case that the second carrier set includes a first carrier of a first band and a second carrier of a second band, the first carrier set includes a first carrier of a first band and a third carrier of a third band; and in a case that each of the first carrier, the second carrier, and the third carrier is configured for one-port transmission, determining that the carrier involved in the switching includes the third carrier used as a switched-from carrier and the second carrier used as the switched-to carrier; or, a first carrier in the first carrier set used as a first switched-from carrier, the second carrier used as a first switched-to carrier, and the third carrier used as a second switched-from carrier and a first carrier in the second carrier set used as a second switched-to carrier.

Optionally, the processor is configured to read a computer program in the memory and perform the following operations:

in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured for one-port transmission, determining that the carrier involved in the switching includes: the third carrier used as a first switched-from carrier, the first carrier used as a first switched-to carrier, the fourth carrier used as a second switched-from carrier, and the second carrier used as a second switched-to carrier; or, the third carrier used as the first switched-from carrier, the second carrier used as the first switched-to carrier, the fourth carrier used as the second switched-from carrier, and the first carrier used as the second switched-to carrier.

Optionally, the processor is configured to read a computer program in the memory and perform the following operations:

determining a carrier switching relationship between a carrier in the first carrier set and a carrier in the second carrier set; determining the carrier involved in switching according to the carrier switching relationship.

Optionally, the carrier switching relationship includes at least one of the following information: (1) correspondence between transmission channels used when different carriers transmit data; (2) a determined carrier switching pair, where the carrier switching pair includes two carriers for performing switching; (3) switching order among different carrier switching pairs.

Optionally, the carrier switching relationship is determined by at least one of the following methods:

(1) based on preset carrier switching pair information;
(2) based on a minimum signal loss rule;
(2) based on a scheduling signaling of downlink control information (DCI).

Optionally, the carrier switching pair information includes: carrier information before switching; carrier information after the switching; carrier switching information involved in switching.

Optionally, the processor is configured to read a computer program in the memory and perform the following operations:

determining a carrier switching group according to at least one carrier for transmitting data before switching and at least one carrier for transmitting data after switching, wherein the carrier switching group includes one carrier before switching and one carrier after switching; determining a signal interruption duration when each carrier switching group performs carrier switching; and determining a carrier switching group involved in switching according to a rule of the signal interruption duration being shortest.

Optionally, the scheduling signaling of the DCI carries a switching indication, where the switching indication includes:

(1) a switched-to carrier involved in switching and a switched-from carrier used before switching, where a transmission channel corresponding to the switched-from carrier is converted into a transmission channel corresponding to the switched-to carrier after switching;

or (2) a switched-from carrier used before switching, where a transmission channel corresponding to the switched-from carrier is converted into a transmission channel corresponding to a switched-to carrier after switching.

It should be note that in FIG. 12, the bus architecture may include any number of interconnected buses and bridges, and specifically, various circuits of one or more processors represented by the processor 1210 and a memory represented by the memory 1220 are linked together. The bus architecture may also link various other circuits, such as a peripheral device, a voltage regulator, and a power management circuit, which are well known in the art, and therefore are not further described herein. The bus interface provides an interface. The transceiver 1200 may be a plurality of elements, that is, includes a transmitter and a transceiver, and provides a unit for communicating with various other apparatuses on a transmission medium. For different user equipment, the user interface 1230 may be an interface capable of being externally connected to an internal required device, and the connected device includes but is not limited to a keypad, a display, a speaker, a microphone, a joystick, and the like. The processor 1210 is responsible for managing the bus architecture and general processing, and the memory 1220 may store data used by the processor 1210 when performing operations.

Optionally, the processor 1210 may be a CPU (Central processing unit), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory, and is configured to perform any one of the methods provided in the embodiments of the present application according to the obtained executable instruction. The processor and the memory may also be physically separated.

It should be noted that the above-mentioned terminal provided in the embodiments of the present disclosure can implement all method steps implemented by the above method embodiments applied to the terminal, and can achieve the same technical effect, which will not be specifically described in detail in this embodiment and some of the beneficial effects that are the same as those in the method embodiment.

As shown in FIG. 13, an embodiment of the present disclosure further provides a network side device, including: a memory 1320, a transceiver 1300, and a processor 1310, wherein the memory 1320 is configured to store a computer program; the transceiver 1300 is configured to transmit and receive data under the control of the processor 1310; and the processor 1310 is configured to read the computer program in the memory and perform the following operations:

determining one or more carriers, involved in switching, from a scheduled first carrier set for transmitting data before switching and a scheduled second carrier set for transmitting data after the switching, where each of the first carrier set and the second carrier set includes at least one carrier, and at least one carrier included in the first carrier set is different from a carrier included in the second carrier set; in a carrier switching time duration, not receiving data on the carrier involved in switching.

Optionally, a quantity of carriers that are different between the first carrier set and the second carrier set is greater than or equal to 3.

Optionally, the processor is configured to read a computer program in the memory and perform the following operations:

in a case that each carrier included in the first carrier set is configured for one-port transmission and each carrier included in the second carrier set is also configured for one-port transmission, determining one carrier from the first carrier set as a switched-from carrier involved in switching, and determining one carrier from the second carrier set as a switched-to carrier involved in switching; considering the determined switched-from carrier and the determined switched-to carrier as the carriers involved in switching.

Optionally, the processor is configured to read a computer program in the memory and perform the following operations:

in a case that the second carrier set includes a first carrier of a first band, the first carrier set includes a second carrier of a second band and a third carrier of a third band, and each of the first carrier, the second carrier, and the third carrier is configured for one-port transmission, determining that the carriers involved in switching include: the second carrier used as a switched-from carrier, and the first carrier used as the switched-to carrier; or, the third carrier used as a switched-from carrier, and the first carrier used as a switched-to carrier.

Optionally, the processor is configured to read a computer program in the memory and perform the following operations:

in a case that the second carrier set includes a second carrier of a second band and a third carrier of a third band and the first carrier set includes a first carrier of a first band, and each of the second carrier, the third carrier, and the first carrier is configured for one-port transmission, determining that the carriers involved in switching include: the first carrier used as a switched-from carrier and the second carrier used as the switched-to carrier; or, the first carrier used as a switched-from carrier, and the third carrier used as a switched-to carrier.

Optionally, the processor is configured to read a computer program in the memory and perform the following operations:

in a case that the second carrier set includes a first carrier of a first band and a second carrier of a second band, the first carrier set includes a first carrier of a first band and a third carrier of a third band, and each of the first carrier, the second carrier, and the third carrier is configured to occupy one-port, determining that the carriers involved in the switching include: the third carrier used as a switched-from carrier and the second carrier used as the switched-to carrier; or, a first carrier in the first carrier set used as first switched-from carriers, the second carrier used as a first switched-to carrier, and the third carrier used as a second switched-from carrier and a first carrier in the second carrier set used as a second switched-to carrier.

Optionally, the processor is configured to read a computer program in the memory and perform the following operations:

in a case that the second carrier set includes a first carrier of a first band and a second carrier of a second band, the first carrier set includes a third carrier of a third band and a fourth carrier of a fourth band; and each of the first carrier, the second carrier, the third carrier, and the fourth carrier is configured to occupy one port, determining that the carriers involved in the switching include: the third carrier used as a first switched-from carrier, the first carrier used as a first switched-to carrier, the fourth carrier used as a second switched-from carrier, and the second carrier used as a second switched-to carrier; or, the third carrier used as the first switched-from carrier, the second carrier used as the first switched-to carrier, the fourth carrier used as the second switched-from carrier, and the first carrier used as the second switched-to carrier.

Optionally, the processor is configured to read a computer program in the memory and perform the following operations:

determining the carrier switching relationship between carriers in the first carrier set and carriers in a second carrier set; determining the carrier involved in switching according to the carrier switching relationship.

Optionally, the carrier switching relationship includes at least one of the following information: (1) correspondence between transmission channels used when different carriers transmit data; (2) a determined carrier switching pair, where the carrier switching pair includes two carriers for performing switching; (3) switching order among different carrier switching pairs.

In FIG. 13, the bus architecture may include any number of interconnected buses and bridges, and specifically, various circuits of one or more processors represented by the processor 1310 and a memory represented by the memory 1320 are linked together. The bus architecture may also link various other circuits, such as a peripheral device, a voltage regulator, and a power management circuit, which are well known in the art, and therefore are not further described herein. The bus interface provides an interface. The transceiver 1300 may be a plurality of elements, that is, includes a transmitter and a transceiver, and provides a unit for communicating with various other apparatuses on a transmission medium. The processor 1310 is responsible for managing the bus architecture and general processing, and the memory 1320 may store data used by the processor 1310 when performing operations.

The processor 1310 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the above-mentioned network-side device provided in the embodiments of the present disclosure can implement all method steps implemented by the above method embodiments applied to a network-side device, and can achieve the same technical effect, which will not be repeated here for the same parts and beneficial effects as the method embodiments in this embodiment.

In addition, an embodiment of the present disclosure further provides a computer-readable storage medium, on which a computer program is stored, wherein the program, when executed by a processor, implements the steps of the foregoing carrier switching method. In addition, the same technical effect can be achieved, and in order to avoid repetition, details are not described herein again. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a compact disk (CD), a high-density digital video disk (DVD), and a Blu-ray disk (BD), High Definition Versatile Disk (HVD, etc.), and semiconductor memory (e.g. Read Only Memory (ROM), Erasable Programmable Read Only Memory (EPROM), Electrically Erasable Programmable Read Only Memory (EEPROM), Non-Volatile Memory (NAND Flash), Solid State Disk (SSD), etc.

A person skilled in the art should understand that the embodiments of the present application may be provided as a method, a system, or a computer program product. Therefore, this application may use a form of hardware only embodiments, software only embodiments, or embodiments with a combination of software and hardware. Moreover, this application may use a form of a computer program product implemented on one or more computer-usable storage media (including but not limited to a disk memory, an optical memory, and the like) including computer-usable program codes.

This application is described with reference to the flowcharts and/or block diagrams of the method, the device (system), and the computer program product according to the embodiments of the present application. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

It should be noted that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Obviously, a person skilled in the art can make various modifications and variations to this application without departing from the spirit and scope of the present application. This application is intended to cover these modifications and variations provided that they fall within the scope of protection defined by the following claims and their equivalent technologies.

## Claims

1.  A carrier switching method, comprising:

    determining a carrier, involved in switching, in a first carrier set for transmitting data before the switching and a second carrier set for transmitting data after the switching, wherein each of the first carrier set and the second carrier set comprises at least one carrier, and at least one carrier of carriers contained in the first carrier set is different from carriers contained in the second carrier set;
    wherein during carrier switching, a terminal does not transmit data on the carrier involved in the switching.

2.  The method according to claim 1, wherein a quantity of carriers contained in the first carrier set and the second carrier set and different between the first carrier set and the second carrier set is greater than or equal to 3.

3.  The method according to claim 1, wherein determining the carrier, involved in the switching, in the first carrier set for transmitting data before the switching and the second carrier set for transmitting data after the switching comprises:

    when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching;
    using the determined switched-from carrier and the determined switched-to carrier as carriers involved in the switching.

4.  The method according to claim 1, wherein determining the carrier, involved in the switching, in the first carrier set for transmitting data before the switching and the second carrier set for transmitting data after the switching comprises: when the second carrier set comprises a first carrier of a first band, the first carrier set comprises a second carrier of a second band and a third carrier of a third band, and when each of the first carrier, the second carrier and the third carrier is configured for one-port transmission, determining the carrier involved in the switching comprises:

    using the second carrier as the switched-from carrier, and using the first carrier as the switched-to carrier; or,
    using the third carrier as the switched-from carrier, and using the first carrier as the switched-to carrier.

5.  The method according to claim 1, wherein determining the carrier, involved in the switching, in the first carrier set for transmitting data before the switching and the second carrier set for transmitting data after the switching comprises: when the second carrier set comprises a second carrier of a second band and a third carrier of a third band and the first carrier set comprises a first carrier of a first band and when each of the second carrier, the third carrier and the first carrier is configured for one-port transmission, determining the carrier involved in the switching comprises:

    using the first carrier as the switched-from carrier, and using the second carrier as the switched-to carrier; or,
    using the first carrier as the switched-from carrier, and using the third carrier as the switched-to carrier.

6.  The method according to claim 1, wherein determining the carrier, involved in the switching, in the first carrier set for transmitting data before the switching and the second carrier set for transmitting data after the switching comprises:

when the second carrier set comprises a first carrier of a first band and a second carrier of a second band and the first carrier set comprises a first carrier of a first band and a third carrier of a third band and when each of the first carrier, the second carrier and the third carrier is configured for one-port transmission, determining the carrier involved in the switching comprises:

using the third carrier as the switched-from carrier, and using the second carrier as the switched-to carrier; or using the first carrier in the first carrier set as a first switched-from carrier, and using the second carrier as a first switched-to carrier, and using the third carrier as a second switched-from carrier and using the first carrier in the second carrier set as the second switched-to carrier.

7. The method according to claim 1, wherein determining the carrier, involved in the switching, in the first carrier set for transmitting data before the switching and the second carrier set for transmitting data after the switching comprises: when the second carrier set comprises a first carrier of a first band and a second carrier of a second band and the first carrier set comprises a third carrier of a third band and a fourth carrier of a fourth band; and when each of the first carrier, the second carrier, the third carrier and the fourth carrier is configured for one-port transmission, determining the carrier involved in the switching comprises:

using the third carrier as a first switched-from carrier, using the first carrier as a first switched-to carrier, using the fourth carrier as a second switched-from carrier, and using the second carrier as a second switched-to carrier; or using the third carrier as a first switched-from carrier, using the second carrier as a first switched-to carrier, using the fourth carrier as a second switched-from carrier, and using the first carrier as a second switched-to carrier.

8. The method according to any one of claims 1 to 7, wherein determining the carrier involved in the switching comprises:

determining carrier switching relationship between carriers in the first carrier set and carriers in the second carrier set; determining the carrier involved in the switching according to the carrier switching relationship.

9. The method according to claim 8, wherein the carrier switching relationship comprises at least one of the following information:

correspondence between transmission channels used by different carriers to transmit data; a determined carrier switching pair comprising two carriers for performing the switching; a switching order among different carrier switching pairs.

10. The method according to claim 8, wherein the carrier switching relationship is determined by at least one of the following methods:

determination based on preset carrier switching pair information; determination based on a rule of minimum signal loss; determination according to a scheduling signaling of downlink control information (DCI).

11. The method according to claim 10, wherein the carrier switching pair information comprises: carrier information before the switching; carrier information after the switching; carrier switching information involved in the switching.

12. The method according to claim 10, wherein determination based on the rule of minimum signal loss comprises:

determining a carrier switching group according to at least one carrier for transmitting data before the switching and at least one carrier for transmitting data after the switching, wherein the carrier switching group comprises a carrier before the switching and a carrier after the switching; determining a signal interruption duration when performing carrier switching of each carrier switching group; according to a rule that the signal interruption duration is shortest, determining the carrier switching group for involved in the switching.

13. The method according to claim 10, wherein the scheduling signaling of the DCI carries a switching indicator, wherein the switching indicator comprises:

a switched-to carrier involved in the switching, and a switched-from carrier used before the switching, wherein a transmission channel corresponding to the switched-from carrier is converted into a transmission channel corresponding to the switched-to carrier after the switching; or

a switched-from carrier used before the switching, wherein the transmission channel corresponding to the switched-from carrier is converted into the transmission channel corresponding to the switched-to carrier after the switching.

14. A carrier switching method, comprising:

determining by a network-side device a carrier, involved in switching, in a scheduled first carrier set for transmitting data before switching and a scheduled second carrier set for transmitting data after the switching, wherein each of the first carrier set and the second carrier set comprises at least one carrier, and at least one carrier of carriers contained in the first carrier set is different from carriers contained in the second carrier set; wherein during carrier switching, the network-side device does not receive data on the carrier involved in the switching.

15. The method according to claim 14, wherein a quantity of carriers contained in the first carrier set and the second carrier set and different between the first carrier set and the second carrier set is greater than or equal to 3.

16. The method according to claim 14, wherein determining the carrier, involved in the switching, in the scheduled first carrier set for transmitting data before the switching and the scheduled second carrier set for transmitting data after the switching comprises:

when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching; using the determined switched-from carrier and the determined switched-to carrier as carriers involved in the switching.

17. The method according to claim 16, wherein determining the carrier involved in the switching, comprises:

determining carrier switching relationship between carriers in the first carrier set and carriers in the second carrier set; determining the carrier involved in the switching according to the carrier switching relationship.

18. The method according to claim 17, wherein the carrier switching relationship comprises at least one of the following information:

correspondence between transmission channels used by different carriers to transmit data; a determined carrier switching pair comprising two carriers for performing the switching; a switching order among different carrier switching pairs.

19. The method according to claim 18, wherein the carrier switching pair information comprises:
carrier information before the switching; carrier information after the switching; carrier switching information involved in the switching.

20. A terminal comprising:
a memory, a transceiver, a processor, wherein the memory is configured to store a computer program; the transceiver is configured to transmit and receive data under control of the processor; the processor is configured to read a computer program in the memory and perform the following operations:

determining a carrier, involved in switching, in a first carrier set for transmitting data before the switching and a second carrier set for transmitting data after the switching, wherein each of the first carrier set and the second carrier set comprises at least one carrier, and at least one carrier of carriers contained in the first carrier set is different from carriers contained in the second carrier set; wherein during carrier switching, the terminal does not transmit data on the carrier involved in the switching.

21. The terminal according to claim 20, wherein the processor is configured to read the computer program in the memory and perform the following operations:

when each carrier contained in the first carrier set is configured for one-port transmission and each carrier contained in the second carrier set is also configured for one-port transmission, determining a carrier from the first carrier set as a switched-from carrier involved in the switching, and determining a carrier from the second carrier set as a switched-to carrier involved in the switching;
using the determined switched-from carrier and the determined switched-to carrier as carriers involved in the switching.

22. The terminal according to claim 20, wherein the processor is configured to read the computer program in the memory and perform the following operations:
when the second carrier set comprises a first carrier of a first band, the first carrier set comprises a second carrier of a second band and a third carrier of a third band, and when each of the first carrier, the second carrier and the third carrier is configured for one-port transmission, determining the carrier involved in the switching comprises:

using the second carrier as the switched-from carrier, and using the first carrier as the switched-to carrier; or,
using the third carrier as the switched-from carrier, and using the first carrier as the switched-to carrier.

23. The terminal according to claim 20, wherein the processor is configured to read the computer program in the memory and perform the following operations:
when the second carrier set comprises a second carrier of a second band and a third carrier of a third band and the first carrier set comprises a first carrier of a first band and when each of the second carrier, the third carrier and the first carrier is configured for one-port transmission, determining the carrier involved in the switching comprises:

using the first carrier as the switched-from carrier, and using the second carrier as the switched-to carrier; or,
using the first carrier as the switched-from carrier, and using the third carrier as the switched-to carrier.

24. The terminal according to claim 20, wherein the processor is configured to read the computer program in the memory and perform the following operations:
when the second carrier set comprises a first carrier of a first band and a second carrier of a second band and the first carrier set comprises a first carrier of a first band and a third carrier of a third band and when each of the first carrier, the second carrier and the third carrier is configured for one-port transmission, determining the carrier involved in the switching comprises:

using the third carrier as the switched-from carrier, and using the second carrier as the switched-to carrier; or
using the first carrier in the first carrier set as a first switched-from carrier, and using the second carrier as a first switched-to carrier, and using the third carrier as a second switched-from carrier and using the first carrier in the second carrier set as the second switched-to carrier.

25. The terminal according to claim 20, wherein the processor is configured to read the computer program in the memory and perform the following operations:
when the second carrier set comprises a first carrier of a first band and a second carrier of a second band and the first carrier set comprises a third carrier of a third band and a fourth carrier of a fourth band; and when each of the first carrier, the second carrier, the third carrier and the fourth carrier is configured for one-port transmission, determining the carrier involved in the switching comprises:

using the third carrier as a first switched-from carrier, using the first carrier as a first switched-to carrier, using the fourth carrier as a second switched-from carrier, and using the second carrier as a second switched-to carrier; or
using the third carrier as a first switched-from carrier, using the second carrier as a first switched-to carrier, using the fourth carrier as a second switched-from carrier, and using the first carrier as a second switched-to carrier.

26. A network-side device, comprising:

a memory, a transceiver, a processor,
wherein the memory is configured to store a computer program; the transceiver is configured to transmit and receive data under the control of the processor; the processor is configured to read the computer program in the memory and perform the following operations:

**EP 4 507 384 A1**

determining by a network-side device a carrier, involved in switching, in a scheduled first carrier set for transmitting data before switching and a scheduled second carrier set for transmitting data after the switching, wherein each of the first carrier set and the second carrier set comprises at least one carrier, and at least one carrier of carriers contained in the first carrier set is different from carriers contained in the second carrier set;

wherein during carrier switching, the network-side device does not receive data on the carrier involved in the switching.

27. A carrier switching device comprising

a first determining unit configured to determine a carrier, involved in switching, in a first carrier set for transmitting data before the switching and a second carrier set for transmitting data after the switching, wherein each of the first carrier set and the second carrier set comprises at least one carrier, and at least one carrier of carriers contained in the first carrier set is different from carriers contained in the second carrier set;

a first processing unit configured to during carrier switching, not transmit data on the carrier involved in the switching.

28. A carrier switching device comprising

a second determining unit configured to determine a carrier, involved in switching, in a scheduled first carrier set for transmitting data before switching and a scheduled second carrier set for transmitting data after the switching, wherein each of the first carrier set and the second carrier set comprises at least one carrier, and at least one carrier of carriers contained in the first carrier set is different from carriers contained in the second carrier set;

a second processing unit, configured to during carrier switching, not receive data on the carrier involved in the switching.

29. A computer-readable storage medium on which a computer program is stored, wherein when the computer program is executed by a processor, the processor implements a carrier switching method according to any one of claims 1 to 13, or a carrier switching method according to any one of claims 14 to 19.

38

EP 4 507 384 A1

FIG. 1

FIG. 2

PLL parameter switch (carrier 1/carrier 2)

Antenna

| Baseband processing | → | DAC | Frequency convert /filtering | RF modulation |
|---|---|---|---|---|

RF portion

PA parameter switch (carrier 1/carrier 2)

**FIG. 3**

| determining a carrier, involved in switching, in a first carrier set for transmitting data before the switching and a second carrier set for transmitting data after the switching, wherein each of the first carrier set and the second carrier set comprises at least one carrier, and at least one carrier of carriers contained in the first carrier set is different from carriers contained in the second carrier set | 401 |
|---|---|

| during carrier switching, a terminal does not transmitting data on the carrier involved in the switching | 402 |
|---|---|

**FIG. 4**

Tx1 and carrier    Tx2 and carrier    Tx2 or Tx1 carrier
switching duration  switching duration  switching duration

**FIG. 5**

Tx1 and carrier    Tx2 and carrier    Tx2 or Tx1 carrier
switching duration  switching duration  switching duration

**FIG. 6**

Transmission end time
(End1)= symbol 3

Transmission start
time(Start4)=symbol 16

Carrier 1

Transmission end time (End2)= symbol 7

Carrier 2

Carrier 3

Transmission start time(Start3)= symbol 9

Tx1 and carrier
switching duration

Tx2 and carrier
switching duration

**FIG. 7**

PUSCH

**FIG. 8**

determining by a network-side device a carrier, involved in switching, in a scheduled first carrier set for transmitting data before switching and a scheduled second carrier set for transmitting data after the switching, wherein each of the first carrier set and the second carrier set comprises at least one carrier, and at least one carrier of carriers contained in the first carrier set is different from carriers contained in the second carrier set

901

during carrier switching, the network-side device does not receive data on the carrier involved in the switching

902

**FIG. 9**

First determining unit   1010

1000

First processing unit   1020

**FIG. 10**

Second determining unit   1110

1100

Second processing unit   1120

**FIG. 11**

```
            ┌─1210
┌──────────┐              ┌──────────────────┐                      ┌─ 1200
│ Processor │ ◄═════════► │                  │         ┌──────────────────┐
└──────────┘              │                  │ ◄═════► │   Transceiver    │
     ┌─1220               │  Bus interface   │         └──────────────────┘
┌──────────┐              │                  │
│  Memory  │ ◄═════════► │                  │
└──────────┘              └────────▲─────────┘
                                   ║
                                   ▼         ┌─ 1230
                          ┌──────────────────┐
                          │  User interface  │
                          └──────────────────┘
```

**FIG. 12**

```
           ┌─1310
┌──────────┐              ┌──────────────────┐                  ┌─ 1300
│ Processor │ ◄════════► │                  │       ┌──────────────────┐
└──────────┘              │                  │ ◄═══► │   Transceiver    │
     ┌─1320               │  Bus interface   │       └──────────────────┘
┌──────────┐              │                  │
│  Memory  │ ◄════════► │                  │
└──────────┘              └──────────────────┘
```

**FIG.**

**FIG. 13**

## INTERNATIONAL SEARCH REPORT

| | International application No. |
| --- | --- |
| | **PCT/CN2023/079263** |

**A. CLASSIFICATION OF SUBJECT MATTER**

H04W36/06(2009.01)i

According to International Patent Classification (IPC) or to both national classification and IPC

**B. FIELDS SEARCHED**

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

CNABS, CNTXT, WPABSC, ENTXTC, VEN, 3GPP: 载波, 载频, 集, 组, 多, 至少, 以上, 切换, 发送, 发射, 传输, 不, 停止, 禁止, 静默, 取消, 天线, 端口, carrier, CC, set, group, multi, at least, more than, switch, send, transmit, no, not, stop, forbid, prohibit, mute, cancel, antenna, port

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113825192 A (SHENZHEN TRANSSION HOLDINGS CO., LTD.) 21 December 2021 (2021-12-21) description, paragraphs [0003]-[0157] | 1-29 |
| Y | CN 114126056 A (HUAWEI TECHNOLOGIES CO., LTD.) 01 March 2022 (2022-03-01) description, paragraphs [0007]-[0008] | 1-29 |
| A | WO 2018085029 A1 (INTEL IP CORPORATION) 11 May 2018 (2018-05-11) entire document | 1-29 |
| A | HUAWEI et al. "Carrier Configuration for UE Support of Carrier Selection" *3GPP TSG RAN WG1 Meeting #82bis R1-155069*, 09 October 2015 (2015-10-09), entire document | 1-29 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 May 2023** | **22 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/079263**

| Patent document cited in search report | | | Publication date (day/month/year) | Patent family member(s) | Publication date (day/month/year) |
|---|---|---|---|---|---|
| CN | 113825192 | A | 21 December 2021 | None | |
| CN | 114126056 | A | 01 March 2022 | None | |
| WO | 2018085029 | A1 | 11 May 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210348961